(19)

Europäisches Patentamt
European Patent Office
Office européen des brevets

(11) **EP 4 488 232 A1**

(12) **EUROPEAN PATENT APPLICATION**
published in accordance with Art. 153(4) EPC

(43) Date of publication:
**08.01.2025 Bulletin 2025/02**

(21) Application number: 23760203.2

(22) Date of filing: **28.02.2023**

(51) International Patent Classification (IPC):
*C01G 25/02* (2006.01)     *C04B 35/486* (2006.01)

(52) Cooperative Patent Classification (CPC):
**C01G 25/02; C01G 25/04; C04B 35/486**

(86) International application number:
**PCT/JP2023/007250**

(87) International publication number:
**WO 2023/163205 (31.08.2023 Gazette 2023/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.02.2022   JP 2022029510**

(71) Applicant: **Tosoh Corporation Yamaguchi 746-8501 (JP)**

(72) Inventors:
• **KAWAMURA, Kenta**
  **Shunan-shi Yamaguchi 746-8501 (JP)**

• **NISHIYAMA, So**
  **Shunan-shi Yamaguchi 746-8501 (JP)**
• **FUKIAGE, Taku**
  **Shunan-shi Yamaguchi 746-8501 (JP)**
• **HOSOI, Kohei**
  **Shunan-shi Yamaguchi 746-8501 (JP)**
• **NAGAYAMA, Hitoshi**
  **Shunan-shi Yamaguchi 746-8501 (JP)**

(74) Representative: **Müller-Boré & Partner Patentanwälte PartG mbB Friedenheimer Brücke 21 80639 München (DE)**

(54) **SINTERED BODY, METHOD FOR MANUFACTURING SINTERED BODY, POWDER, AND PRE-SINTERED BODY**

(57)    To provide at least one of a sintered body with both high dynamic strength and high static strength, a method for producing the sintered body, a powder and a calcined body. A sintered body of zirconia, wherein the zirconia contains a stabilizing element, the stabilizing element contains at least one rare-earth element other than yttrium, and the sintered body has an average grain size of 0.05 $\mu$m or more and 0.75 $\mu$m or less and has a plastic deformable region.

FIG. 7

EP 4 488 232 A1

**Description**

TECHNICAL FIELD

The present disclosure relates to a sintered body having high impact resistance and containing zirconia as a main phase, a method for producing a sintered body, a powder and a calcined body.

BACKGROUND ART

Sintered bodies with a zirconia matrix (hereinafter also referred to as "zirconia sintered bodies") are being studied for decorative applications, such as decorative parts for clocks and watches, portable electronic devices, automobiles, home appliances and the like, in addition to conventional applications that require strength, such as grinding media and structural materials. Sintered bodies for decorative applications are required to have high strength and toughness to prevent fracture by external impact. Various sintered bodies with high strength and toughness have been reported as highly reliable materials.

In recent years, a sintered body with improved fracture resistance against an impact closer to an impact in practical use in addition to characteristics such as high strength and high toughness has also been reported (Patent Document 1).

Patent Document 1 reports a sintered body produced by sintering a mixed powder of a zirconia powder containing 3.4% to 5.0% by mole of ceria and 0.7% to 1.2% by mole of yttria and an alumina powder. It has been reported that the sintered body exhibits high impact resistance, that is, high dynamic strength, by forming an impact mark due to plastic deformation under a dynamic load in a ball drop test.

PRIOR ART DOCUMENTS

PATENT DOCUMENTS

Patent Document 1: JP-A-2021-91601

DISCLOSURE OF INVENTION

TECHNICAL PROBLEM

From the perspective of application of an exterior member or the like to practical use, a sintered body is required to have high static strength in addition to high dynamic strength. However, the sintered body described in Patent Document 1 is not reported to have high static strength.

An object of the present disclosure is to provide at least one of a sintered body with both high dynamic strength and high static strength, a method for producing the sintered body, a powder and a calcined body.

SOLUTION TO PROBLEM

The present inventors have studied the static strength, particularly bending strength, of a zirconia sintered body with high dynamic strength. As a result, the present inventors have paid attention to the fact that a solid solution of yttrium and cerium described in Patent Document 1 has remarkably improved dynamic strength but limitedly improved static strength. Furthermore, it has been found that a zirconia sintered body with both high dynamic strength and high static strength can be obtained by solid solution of a stabilizing element other than a combination of yttrium and cerium, as compared with the improvement of static strength by solid solution of yttrium and cerium.

The present invention is defined in the claims, and the gist of the present disclosure is as follows:

[1] A sintered body of zirconia, wherein the zirconia contains a stabilizing element, the stabilizing element contains at least one rare-earth element other than yttrium, and the sintered body has an average grain size of 0.05 $\mu$m or more and 0.75 $\mu$m or less and has a plastic deformable region.

[2] The sintered body according to [1], which has a stabilizing element content of 0.1 % by mole or more and less than 3.0% by mole.

[3] The sintered body according to [1] or [2], wherein the rare-earth element includes at least one selected from the group consisting of neodymium, gadolinium, ytterbium, holmium and samarium.

[4] The sintered body according to any one of [1] to [3], wherein the stabilizing element further contains yttrium.

[5] The sintered body according to [1] to [4], which has an yttrium content of 0% by mole or more and 1.2% by mole or less.

[6] The sintered body according to any one of [1] to [5], comprising alumina.

[7] The sintered body according to [6], which has an alumina content of 0.1% by mass or more and 30% by mass or less.

[8] A zirconia powder comprising zirconia containing a stabilizing element and having a monoclinic fraction of more than 70%, wherein the stabilizing element includes at least one rare-earth element other than yttrium.

[9] The powder according to [8], which has a rare-earth element content of 0.1% by mole or more and less than 3.0% by mole.

[10] The powder according to [8] or [9], wherein the rare-earth element includes at least one selected from the group consisting of neodymium, gadolinium, ytterbium, holmium and samarium.

[11] The powder according to any one of [8] to [10], wherein the stabilizing element further contains yttrium.

[12] The powder according to [8] to [11], which has an yttrium content of 0% by mole or more and 1.2% by mole or less.

[13] The powder according to any one of [8] to [12], wherein the zirconia has a monoclinic phase with a crystallite size of more than 15 nm and 80 nm or less.

[14] The zirconia powder according to any one of [8] to [13], which has a BET specific surface area of 8 m$^2$/g or more and less than 40 m$^2$/g.

[15] The powder according to any one of [8] to [14], comprising alumina.

[16] The powder according to [15], which has an alumina content of 0.1% by mass or more and 30% by mass or less.

[17] A method for producing a sintered body, comprising sintering the powder according to any one of [8] to [16].

[18] A calcined body comprising zirconia containing a stabilizing element and having a monoclinic fraction of more than 70%, wherein the stabilizing element includes at least one rare-earth element other than yttrium.

ADVANTAGEOUS EFFECTS OF INVENTION

The present disclosure can provide at least one of a sintered body with both high dynamic strength and high static strength, a method for producing a sintered body, a powder and a calcined body.

BRIEF DESCRIPTION OF DRAWINGS

[Fig. 1] Fig. 1 is a schematic view of a ball drop test using a Du Pont ball drop tester.

[Fig. 2] Fig. 2 is a schematic view of an example of the center of impact (formation of a depressed portion) after a ball drop test.

[Fig. 3] Fig. 3 is a schematic view of an example of the vicinity of the center of impact in a known sintered body after the ball drop test.

[Fig. 4] Fig. 4 is a schematic view of an example of the arrangement of a sample in the ball drop test.

[Fig. 5] Fig. 5 is a schematic view of a method for measuring the depth of an impact mark.

[Fig. 6] Fig. 6(a) is a schematic view of an example of a fracture in the ball drop test, and Fig. 6(b) is a schematic view of an example of no fracture in the ball drop test.

[Fig. 7] Fig. 7 is an appearance of a sintered body of Example 11 after the ball drop test.

[Fig. 8] Fig. 8 is an appearance of a Vickers indentation of a sintered body of Example 4 after measurement of Vickers hardness.

[Fig. 9] Fig. 9 is a result of Raman line mapping near the Vickers indentation of the sintered body of Example 4 after measurement of Vickers hardness.

DESCRIPTION OF EMBODIMENTS

A sintered body and a powder according to the present disclosure are described in the following embodiments.

The terms used in the present embodiments are described below.

The terms "monoclinic fraction" and "tetragonal fraction" refer to the proportions of a monoclinic phase and a tetragonal phase, respectively, in the crystalline phase of zirconia. A powder X-ray diffraction (hereinafter also referred to as "XRD") pattern can be used to determine the monoclinic fraction using the following formula (1) and the tetragonal fraction using the following formula (2).

$$f_m = \{I_m(111) + I_m(11\text{-}1)\}/[I_m(111) + I_m(11\text{-}1) + I_{t,c}(111)] \times 100 \quad (1)$$

$$f_t = I_t(111)/[I_m(111) + I_m(11\text{-}1) + I_{t,c}(111)] \times 100 \qquad (2)$$

In the formulae (1) and (2), $f_m$ denotes the monoclinic fraction (%), ft denotes the tetragonal fraction (%), $I_m(111)$ and $I_m(11\text{-}1)$ denote integrated intensities of XRD peaks corresponding to a (111) plane and a (11-1) plane of a monoclinic phase, respectively, and $I_{t,c}(111)$ denotes the sum of an integrated intensity of an XRD peak corresponding to a (111) plane of a tetragonal phase and an integrated intensity of an XRD peak corresponding to a (111) plane of a cubic phase.

The measurement conditions may be as follows:

Radiation source: CuKα radiation (λ = 1.5418 angstroms)
Tube voltage: 45 kV
Tube current: 40 mA
Measurement mode: continuous scanning
Scanning speed: 4 degrees/min
Step width: 0.02 degrees
Measurement range: 2θ = 26 degrees or more and 33 degrees or less
Goniometer: radius 185 mm

The term "crystallite size of a monoclinic phase" (hereinafter also referred to as "$D_m$") of zirconia refers to a value determined from an XRD pattern of a powder using the following formula (3). The term "crystallite size of a tetragonal phase" (hereinafter also referred to as "Dt") of zirconia refers to a value determined from an XRD pattern of a powder using the following formula (4).

$$D_m = \kappa\lambda/(\beta\cos\theta_m) \qquad (3)$$

$$D_t = \kappa\lambda/(\beta\cos\theta_t) \qquad (4)$$

In the formulae (3) and (4), $D_m$ denotes the crystallite size (nm) of a monoclinic phase, Dt denotes the crystallite size (nm) of a tetragonal phase, κ denotes the Scherrer constant (κ = 1), λ denotes the wavelength (nm) of a light source used for XRD measurement, β denotes the half-width (degree) after correction of instrumental broadening using quartz sand (manufactured by Wako Pure Chemical Industries, Ltd.) with a particle size of 25 μm or more and 90 μm or less, $\theta_m$ denotes the Bragg angle (degree) of reflection corresponding to a (11-1) plane of a monoclinic phase in XRD measurement, and $\theta_t$ denotes the Bragg angle (degree) of reflection corresponding to a (111) plane of a tetragonal phase in XRD measurement. When CuKα radiation is used as a light source for XRD measurement, λ is 0.15418 nm.

The term "BET specific surface area" refers to a value measured by a BET one-point method using nitrogen ($N_2$) as an adsorption material in accordance with JIS R 1626-1996.

The term "average grain size" refers to an average size based on the number of zirconia crystal grains constituting a sintered body and is determined by heat-treating a mirror-polished sintered body, observing the sintered body with a scanning electron microscope (hereinafter also referred to as "SEM") and subjecting an obtained SEM image to image analysis.

The SEM observation may be performed with a typical scanning electron microscope (for example, JSM-IT500LA, manufactured by JEOL Ltd.). The SEM observation may be performed by appropriately setting the observation magnification so that the number of crystal grains to be subjected to image analysis (crystal grains observed without interruption of their grain boundaries in a SEM image (described later)) is 150 ± 50. To suppress variations in crystal grains to be observed due to the difference in SEM observation areas, SEM images are preferably taken so that the total of crystal grains to be observed in two or more, preferably three or more and five or less, SEM images is the number of crystal grains described above. SEM observation conditions may be as follows:

Accelerating voltage: 5 to 15 kV
Observation magnification: 5,000 times to 40,000 times

Image analysis of a SEM image may be performed using image analysis software (for example, Mac-View Ver. 5, manufactured by MOUNTECH). More specifically, crystal grains observed without interruption of their grain boundaries in a SEM image are extracted, and the area [μm²] of each extracted crystal grain is determined. The determined area is converted into the diameter [μm] of a circle with the same area as the determined area, and the diameter (heywood diameter; hereinafter also referred to as the "equivalent circular diameter") may be regarded as the grain size of the crystal grain. The average value of the equivalent circular diameters of the extracted crystal grains may be used as the average grain size of the sintered body.

It is difficult to observe the contrast of a grain boundary in a mirror-polished sintered body, and the heat treatment should therefore be performed without a change in grain size.

Heat treatment conditions for a sintered body include, for example, holding the sintered body at a temperature lower than the sintering temperature by 50°C or more for 0.1 hours or more and are, for example, the following conditions.

Heat-treatment temperature: 1100°C or more and 1500°C or less

Heat-treatment time: 0.1 hours or more and 1.0 hour or less

A sintered body according to the present disclosure is described in the following embodiments.

(Plastic Deformation Region)

The sintered body according to the present embodiment has a plastic deformable region. For example, the plastic deformable region is a region in which the application of an impact force forms an impact mark. In the present embodiment, "plastic deformation" refers to deformation of a sintered body caused by the application of an external force and remaining in the sintered body after removal of the external force. Plastic deformation is therefore different from deformation that disappears after removal of the external force (so-called elastic deformation) or fracture due to generation and development of a defect, such as a crack, without deformation of a sintered body (so-called brittle fracture). Plastic deformation in the present embodiment is also different from deformation due to so-called superplasticity, which is extension due to continuous grain boundary sliding when deformed at a constant strain rate in a high-temperature region (for example, in the temperature range of 800°C or more). One reason for improved impact resistance, that is, higher impact resistance of the sintered body according to the present embodiment may be that a plastic deformable region (hereinafter also referred to as a "plastic deformation region"), such as a region in which an impact mark is formed, has the function of absorbing and dispersing energy from an applied impact force. Thus, it is thought that, when an impact force is applied, at least plastic deformation before brittle fracture reduces brittle fracture and improves impact resistance.

The sintered body according to the present embodiment only needs to at least partly have a plastic deformation region (that is, a sintered body with a plastic deformation region) and may be composed mainly of the plastic deformation region or may be composed of the plastic deformation region.

The "impact force" is a force by which energy is transferred to a sintered body, and is particularly a dynamic external force, preferably an external force exceeding the fracture resistance of the sintered body, more preferably a dynamic external force exceeding the fracture resistance of the sintered body, or a dynamic external force by which elastic energy is transferred to the sintered body.

The phrase "application of an impact force", as used herein, refers to the application of energy to at least part of a sintered body, for example, dynamic application of energy to the sintered body due to contact between the sintered body and an object, such as contact between a falling sintered body and the ground or the like or contact between a falling object and the sintered body.

The term "impact mark", as used herein, refers to a mark formed by the application of an impact force to a sintered body, preferably a mark in the sintered body formed by the application of an impact force. In other words, an impact mark is a mark of plastic deformation in a sintered body and is a mark of plastic deformation before fracture. A specific impact mark may be a depressed portion or an uneven portion, or a depressed portion, at the center of impact (described later), or a depressed portion in the application direction of an impact force.

In the present embodiment, a plastic deformation region in a sintered body can be determined by applying an impact force to the sintered body by any method (for example, a dynamic external force that promotes fracture of the sintered body). For example, a plastic deformation region in a sintered body can be determined by applying an impact force to the sintered body and checking for a mark of plastic deformation (particularly, a mark of deformation before fracture), such as a depressed portion or an uneven portion, as an impact mark in the sintered body. In the sintered body according to the present embodiment, an impact mark is formed by plastic deformation and may include a defect due to subsequent brittle fracture (after the formation of the impact mark), such as a crack. On the other hand, after the application of an impact force, the absence of a plastic deformation region can be judged from the presence of only a defect due to brittle fracture, such as a crack, (that is, only a defect without an impact mark due to plastic deformation) or by the presence of only a deformation due to fracture as in Hertzian fracture (that is, only a deformation formed by the development of fracture of an initial crack or the like).

A preferred method for determining a plastic deformation region may be a ball drop test of dropping a 300-g falling weight from a drop height of 200 mm at room temperature using a Du Pont ball drop tester according to JIS K 5600 5-3 (hereinafter also referred to simply as a "ball drop test").

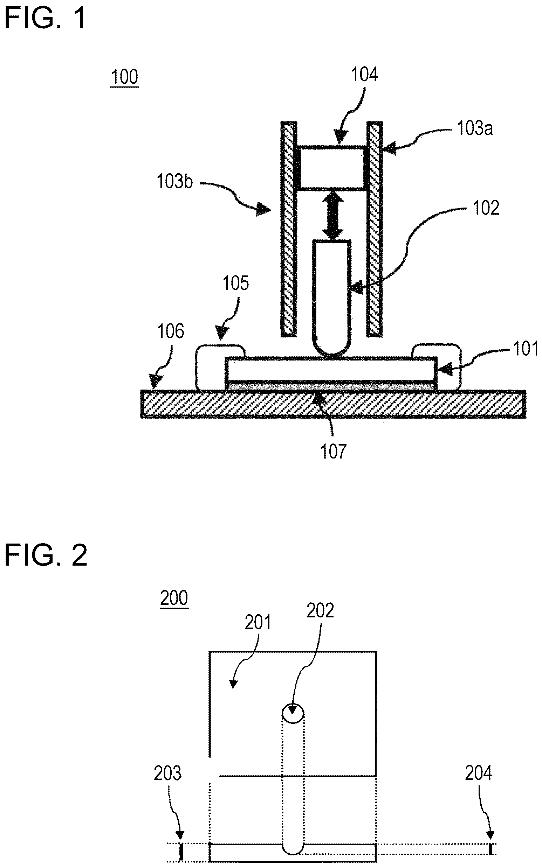

Fig. 1 is a schematic view of a ball drop test using a Du Pont ball drop tester. As illustrated in Fig. 1, in the ball drop test, a sample (101) is placed on a sample stage (106) of a cylindrical ball drop tester. A protective tape (107) is attached to the back surface of the sample (101). A fixing tape (105) is attached to the side surface of the sample (101). A falling weight is composed of a weight (104) and a die (punch: 102), and the die (102) is placed on the surface of the sample (101). The ball drop test may be performed by dropping a weight (104) from a height corresponding to the drop height from the die (the height indicated by the double-headed arrow in Fig. 1: 200 mm). The die (102) has a cylindrical shape with a spherical (hemispherical) tip. The weight (104) is dropped along the guides (103a, 103b) of the Du Pont ball drop tester to apply a desired impact force to the sample (101) via the die (102).

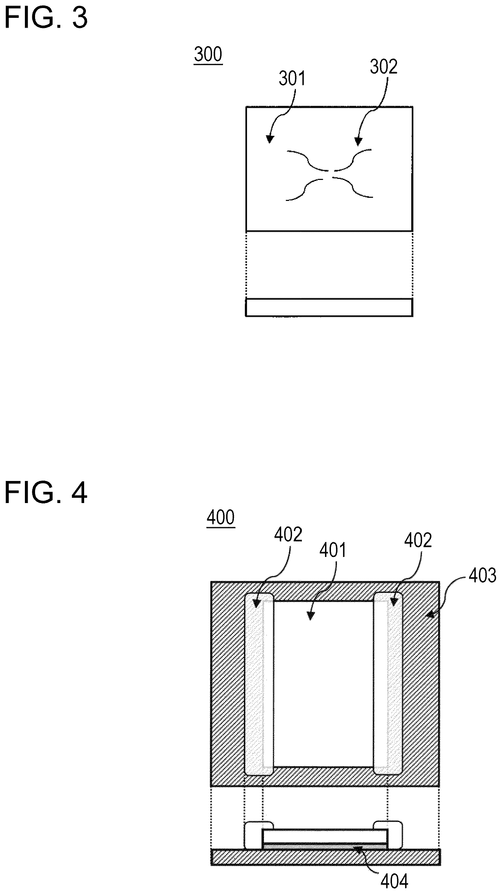

Fig. 2 is a schematic view of the appearance of the sintered body according to the present embodiment after the ball drop test. Fig. 2 shows that the sintered body according to the present embodiment has an impact mark in a region to which an impact force was applied with a falling weight (die) in the ball drop test (hereinafter also referred to as "the center of impact"). The impact mark in Fig. 2 is a depressed portion formed near the center of impact, and the plastic deformation region can be visually observed. Although not shown, a defect due to brittle fracture, such as a crack, may be present near the depressed portion. In contrast, Fig. 3 is a schematic view of the appearance of a known sintered body after the ball drop test. As illustrated in Fig. 3, the known sintered body has no impact mark at the center of impact and has only a defect due to brittle fracture, such as a crack.

The presence or absence of a plastic deformation region may be determined by visual observation and/or by observation with an optical microscope, or by visual observation. The magnification for observation with an optical microscope may range from 1 to 100 times, preferably 10 to 50 times.

Although not shown, a known sintered body with high fracture toughness has no change in appearance in the ball drop test and has no impact mark. In contrast, a sintered body with a plastic deformation region has plastic deformation before brittle fracture. Thus, if no impact mark is observed, the presence or absence of a plastic deformation region may also be determined by repeatedly performing a ball drop test while increasing the drop height until an impact mark can be observed and checking for an impact mark, such as a depressed portion.

To determine the presence or absence of a plastic deformation region with impact resistance acceptable to decorative parts, such as exterior materials of clocks and watches and portable electronic devices, the presence or absence of the plastic deformation region is preferably determined in the present embodiment by dropping a 300-g falling weight from a drop height of 200 mm in a ball drop test.

The ball drop test in the present embodiment can be performed at room temperature (20°C to 30°C) using a Du Pont ball drop tester according to JIS K 5600 5-3. The ball drop test may be performed under the following conditions.

Falling weight: (shape) a cylindrical die with a spherical tip 6.35 mm in radius (mass) 300 g
Drop height: 200 mm
Sample: a plate-like sintered body 40 mm in length x 30 mm in width x 2 mm in thickness with a surface roughness Ra of 0.02 μm or less on both surfaces

The sample is mounted by fixing a surface (a main surface 40 mm in length x 30 mm in width) of the sample to the sample stage of the ball drop tester with a double-sided tape to prevent scattering of pieces of the sample. A fixing tape (protective tape) is attached to a main surface of the sample opposite to the fixed surface in the longitudinal direction of the main surface to fix the sample (Fig. 4). The ball drop test may be performed on the fixed sample.

The depth of an impact mark formed in the ball drop test, for example, the maximum depth [mm] of the impact mark (204 in Fig. 2) may be more than 0% and 3.5% or less, 0.05% or more and 3% or less or 0.5% or more and 3% or less, of the thickness [mm] of the sintered body (203 in Fig. 2). The depth (204) of the impact mark (depressed portion) in Fig. 2 is emphasized.

In the present embodiment, the depth of the impact mark can be measured with a typical laser microscope (for example, VK-9500/VK-9510 manufactured by Keyence Corporation) or a contact-type surface profiler (for example, Dektak XTL, manufactured by Bruker AXS K.K.) For measurement with a laser microscope, the observation magnification may range from 10 to 50 times or may be 20 times, and the laser wavelength may be 408 nm.

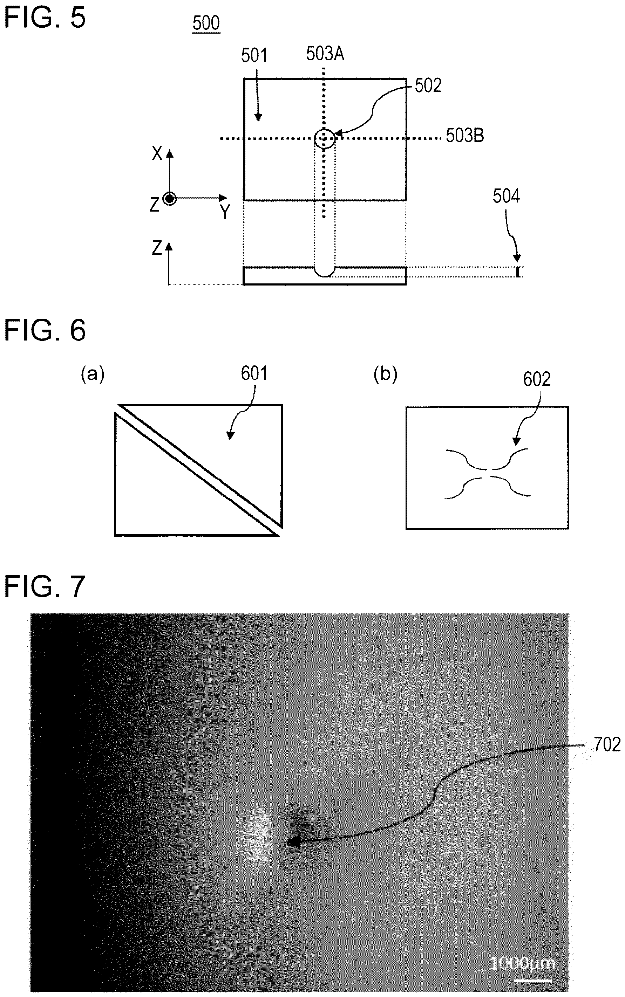

Fig. 5 is a schematic view of an example of a method for measuring the depth of an impact mark. The method for measuring the depth of an impact mark is not limited to the following method. In the measurement of the depth of an impact mark in the present embodiment, from line profiles in a top view in an X-axis direction (503A), which is the maximum radial direction of an almost circular impact mark on a surface on which a ball has dropped, and in a Y-axis direction (503B), which is perpendicular to the X-axis direction and extends on the surface on which the ball has dropped, the difference between the height of the surface on which the ball has dropped and the height of the impact mark surface, that is, the depth (504) of the impact mark is measured in a Z-axis direction perpendicular to the X-axis and the Y-axis. The maximum depth L1 measured in the X-axis direction and the maximum depth L2 measured in the Y-axis direction may be averaged (= (L1 + L2)/2) as the depth of the impact mark of the sample. When a laser microscope is used, the measurement condition in the measurement of the length of the deepest portion is, for example, 0.5 μm/step. Before the measurement, a standard sample with a known pattern length (for example, a patterned Si substrate) attached to the apparatus may be measured to ensure the analysis accuracy.

Such measurements of line profiles, the deepest portion in the Z-axis direction, and the like can be analyzed by image analysis using analysis software or the like provided with a laser microscope (for example, software name: VK-H1A9VK Analyzer Version 3.0.1.0).

(Sintered Body)

The sintered body according to the present embodiment contains a stabilizing element, and the stabilizing element includes at least one rare-earth element other than yttrium.

The stabilizing element is an element for stabilizing zirconia, for example, a rare-earth element. The zirconia in the sintered body according to the present embodiment contains at least one rare-earth element other than yttrium (Y) as a stabilizing element. The rare-earth element is preferably other than cerium (Ce). The rare-earth element preferably contains at least one selected from the group consisting of neodymium (Nd), samarium (Sm), gadolinium (Gd), ytterbium (Yb) and holmium (Ho), more preferably at least one selected from the group consisting of neodymium, samarium, gadolinium and ytterbium, still more preferably at least one selected from the group consisting of neodymium, samarium and gadolinium. The rare-earth element preferably contains neodymium because the sintered body according to the present embodiment can have a blue color tone, preferably contains samarium because the sintered body according to the present embodiment can have a yellow color tone, preferably contains gadolinium because the sintered body according to the present embodiment tends to have high ball drop strength and preferably contains ytterbium because the sintered body according to the present embodiment tends to have high resistance to hydrothermal degradation. The zirconia in the sintered body according to the present embodiment may contain two or more rare-earth elements.

In the zirconia in the sintered body according to the present embodiment, the stabilizing element may further contain yttrium. Thus, the stabilizing element in the sintered body according to the present embodiment is preferably (i) at least one selected from the group consisting of neodymium, samarium, gadolinium, ytterbium and holmium or (ii) yttrium and at least one selected from the group consisting of neodymium, samarium, gadolinium, ytterbium and holmium.

The stabilizing element content (hereinafter also referred to as the "stabilizing element level") may be such that the zirconia is partially stabilized. The amount of the stabilizing element on an oxide basis is more than 0% by mole, 0.1% by mole or more, 0.2% by mole or more, 0.5% by mole or more, 1.0% by mole or more or 1.5% by mole or more and less than 3% by mole, 2.5% by mole or less, 2.3% by mole or less, 2.0% by mole or less or less than 2.0% by mole. For example, the amount of the stabilizing element is more than 0% by mole and less than 3% by mole, 0.1% by mole or more and less than 3% by mole, preferably more than 0% by mole and 2.5% by mole or less, more preferably 0.5% by mole or more and 2.0% by mole or less. In the present embodiment, the stabilizing element level is the ratio (% by mole) of the total of stabilizing elements on an oxide basis to the total of zirconia and stabilizing elements on an oxide basis.

The stabilizing element on an oxide basis may be $Nd_2O_3$ for neodymium, $Srri_2O_3$ for samarium, $Gd_2O_3$ for gadolinium, $Yb_2O_3$ for ytterbium, $Ho_2O_3$ for holmium and $Y_2O_3$ for yttrium.

In a sintered body containing zirconia containing at least one of neodymium, samarium, gadolinium, ytterbium and holmium as a stabilizing element, each stabilizing element content (each stabilizing element content is hereinafter also referred to as a "neodymium content" or the like when the stabilizing element is neodymium or the like) is more than 0% by mole, 0.1% by mole or more, 0.2% by mole or more, 0.5% by mole or more, 1.0% by mole or more or 1.5% by mole or more and less than 3.0% by mole, 2.5% by mole or less, 2.3% by mole or less or 2.0% by mole or less.

Each stabilizing element content in the present embodiment is the ratio (% by mole) of each stabilizing element on an oxide basis to the total of zirconia and stabilizing elements on an oxide basis.

In the sintered body according to the present embodiment, each stabilizing element content is arbitrary as long as the amount of the stabilizing element is satisfied. As the stabilizing element content of the sintered body according to the present embodiment, the neodymium content is, for example, 0.1% by mole or more, 0.2% by mole or more or 0.5% by mole or more and less than 3.0% by mole, and the samarium content may be 0.1% by mole or more, 0.3% by mole or 0.5% by mole or more and less than 3.0% by mole.

In the sintered body according to the present embodiment, the gadolinium content is, for example, 0.3% by mole or more or 0.5% by mole or more and less than 3.0% by mole or 2.5% by mole or less, the ytterbium content may be 0.1% by mole or more or 0.5% by mole or more and less than 3.0% by mole or 2.5% by mole or less, and the holmium content may be 0.1% by mole or more or 0.5% by mole or more and less than 3.0% by mole or 2.5% by mole or less.

The yttrium content is 0% by mole or more. That is, the sintered body according to the present embodiment may not contain yttrium or may contain yttrium. The yttrium content of the sintered body according to the present embodiment may be 0% by mole or more, 0.1% by mole or more, 0.3% by mole or more or 0.5% by mole or more and 2.5% by mole or less, 2.0% by mole or less, 1.5% by mole or less or 1.2% by mole or less.

The stabilizing element is preferably solid-dissolved in zirconia, and the sintered body according to the present embodiment preferably contains no undissolved stabilizing element. In the present embodiment, no undissolved stabilizing element means that an XRD pattern of the sintered body has no XRD peak of a compound of the stabilizing element.

The sintered body according to the present embodiment may contain a pigment component. The pigment component in the sintered body refers to a component with a function of coloring the sintered body. Such a sintered body can have a color tone different from the original color tone of zirconia. A pigment component in the sintered body according to the present embodiment is at least one of elements with the function of coloring zirconia other than rare-earth elements and compounds thereof and is preferably, for example, a compound containing a metal element, more preferably a transition metal element or a compound containing the transition metal. A specific pigment component is more preferably at least one element selected from the group consisting of vanadium (V), chromium (Cr), manganese (Mn), iron (Fe), cobalt (Co), nickel (Ni), copper (Cu) and zinc (Zn) or a compound containing at least one thereof, still more preferably an oxide containing at least one element selected from the group consisting of manganese, iron, cobalt, nickel and zinc. As a pigment component, for example, when a mixture of a zirconia powder and a pigment component powder is sintered, a coloring element derived from the pigment component powder or a compound containing the coloring element can be contained as a pigment component in a zirconia sintered body.

A pigment component in the sintered body according to the present embodiment may have any form, may be contained as particles (second phase particles) or may be solid-dissolved in zirconia.

The sintered body according to the present embodiment with a lower pigment component content tends to be more easily plastically deformed. The pigment component content is more than 0% by mass, preferably 0.001% by mass or more. Although a sintered body with a plastic deformation region may have any pigment component content, the pigment component content is, for example, 10% by mass or less, less than 7.5% by mass, 5.0% by mass or less, 3.5% by mass or less or 3.0% by mass or less. In the presence of a pigment component, the pigment component content is, for example, more than 0% by mass and 10% by mass or less, 0.001% by mass or more and less than 7.5% by mass, 0.01% by mass or more and 5% by mass or less or 0.04% by mass or more and 1% by mass or less. The pigment component content can be determined as the ratio of the total mass of pigment components on an oxide basis to the mass of the sintered body according to the present embodiment. As a pigment component on an oxide basis, for example, cobalt may be $CoO$, iron may be $Fe_2O_3$, manganese may be $Mn_3O_4$, and zinc may be $ZnO$. When a pigment component forms a composite oxide, the pigment component content can be determined as the ratio of the total mass of pigment components on a composite oxide basis to the mass of the sintered body according to the present embodiment.

The sintered body according to the present embodiment may contain alumina ($Al_2O_3$). The sintered body according to the present embodiment does not necessarily contain alumina and therefore has an alumina content of 0% by mass or more. When the sintered body according to the present embodiment contains alumina, the alumina content may be more than 0% by mass and less than 30% by mass, preferably more than 0% by mass and 25% by mass or less, more preferably 0.005% by mass or more and 20% by mass or less. The alumina content may be 0% by mass or more, more than 0% by mass, 0.005% by mass or more, 0.05% by mass or more or 0.25% by mass or more and 30% by mass or less, 25% by mass or less or 20% by mass or less. From the perspective that the sintered body according to the present embodiment can easily have high permeability, the sintered body preferably contains no alumina. From the perspective that a dense sintered body is easily obtained at a relatively low temperature, the alumina content is preferably 0.05% by mass or more. From the perspective that the sintered body according to the present embodiment is likely to have good mechanical characteristics, such as static strength, the alumina content is preferably 30% by mass or less. The alumina content may be determined as the mass ratio of aluminum in terms of $Al_2O_3$ to the total of zirconia, stabilizing elements on an oxide basis, pigment components on an oxide basis and aluminum in terms of $Al_2O_3$.

Alumina has a great influence on the mechanical characteristics of the sintered body according to the present example and has little effect of coloring zirconia. Thus, in the present embodiment, the pigment component does not include alumina, that is, an oxide of aluminum that does not form a composite oxide with a metal element or the like.

The sintered body according to the present embodiment may contain, in addition to alumina, at least any one of at least one additive agent selected from the group consisting of silica ($SiO_2$), titania ($TiO_2$), gallium oxide ($Ga_2O_3$), germanium oxide ($GeO_2$), niobium oxide ($Nb_2O_5$) and thallium oxide ($Ta_2O_5$) and at least one additive agent selected from the group consisting of silica, titania, gallium oxide and germanium oxide. Containing the additive agent, the sintered body can have desired mechanical characteristics. In the presence of the additive agent, the additive agent content may be more than 0% by mass and 5% by mass or less, 0.001% by mass or more and less than 3% by mass, 0.01% by mass or more and 1% by mass or less or 0.05% by mass or more and 0.5% by mass or less.

Although the sintered body according to the present embodiment may contain incidental impurities, such as hafnia ($HfO_2$), the sintered body preferably does not contain materials other than stabilizing elements, zirconia, optional alumina, optional pigment components and incidental impurities. In the present embodiment, the hafnia content may be calculated on the assumption that 2% by mass of the zirconia content is the hafnia content.

For example, when the sintered body according to the present embodiment is a zirconia sintered body containing a composite oxide represented by $ABO_3$ or $AB_2O_4$ as a pigment component, alumina and holmium and yttrium as stabilizing elements, each component content may be determined as described below. In the following formula, the term of $ZrO_2$, that is, the zirconia content may be calculated as an amount obtained by subtracting the other component contents (that is, the pigment component content, the alumina content and the stabilizing element content) determined by composition analysis from the total amount of the sintered body, and it is not necessary to consider the mass of incidental impurities including 2% by mass of hafnia.

Amount of pigment component [% by mass] = $\{(ABO_2 + AB_2O_4)/(Ho_2O_3 + Y_2O_3 + ZrO_2 + Al_2O_3 + ABO_3 + AB_2O_4)\}$ x 100

Amount of alumina [% by mass] = $\{Al_2O_3/(Ho_2O_3 + Y_2O_3 + ZrO_2 + Al_2O_3 + ABO_3 + AB_2O_4)\}$ x 100

Amount of stabilizing element [% by mole] = $\{(Ho_2O_3 + Y_2O_3)/(Ho_2O_3 + Y_2O_3 + \text{--> } ZrO_2)\}$ x 100

$$\text{Amount of holmium [\% by mole]} = \{(Ho_2O_3)/(Ho_2O_3 + Y_2O_3 + ZrO_2)\} \times 100$$

$$\text{Amount of yttrium [\% by mole]} = \{(Y_2O_3)/(Ho_2O_3 + Y_2O_3 + ZrO_2)\} \times 100$$

(Density of Sintered Body)

The sintered body according to the present embodiment preferably has a high density and has a relative density of 95% or more, preferably 98% or more and 100% or less.

In the present embodiment, the measured density is the mass determined by mass measurement relative to the volume determined using the Archimedes' principle. In the present embodiment, the relative density can be determined from the ratio of the measured density to the true density. In the present embodiment, when additives and pigment components are not contained, the true density (g/cm$^3$) may be determined from the ratio of the unit cell mass (g) to the unit cell volume (cm$^3$) of zirconia in the sintered body on the assumption that the crystalline phase of the zirconia is entirely a tetragonal phase. The unit cell volume may be determined from the lattice constant, which is calculated from an interplanar spacing determined using the Bragg equation from $2\theta$ of each peak top of an XRD peak corresponding to a tetragonal (004) plane (hereinafter also referred to as "$I_t(004)$") and an XRD peak corresponding to a tetragonal (220) plane (hereinafter also referred to as "$I_t(220)$") in an XRD pattern measured under the conditions described below. The unit cell mass may be determined as the total mass of cations and anions contained in the unit cell using the results of the composition analysis of the sintered body.

When the sintered body according to the present embodiment contains an additive or a pigment component, the true density of the sintered body may be determined using the true density $\rho_{Zr}$ of a zirconia portion calculated by the above method and the true density of the additive or the pigment component described below. That is, the reciprocal of the sum of values obtained by dividing the mass ratio of each component contained in the sintered body by the true density of each component is the true density of the sintered body. For example, for a sintered body containing X% by mass of alumina and Y% by mass of iron oxide, the true density $\rho_{th}$ may be determined as follows:

$$\rho_{th} = 100/[(X/3.987) + (Y/5.24) + (100 - X - Y)/\rho_{Zr}]$$

The true densities of additives and pigment components used were as follows:

Alumina ($Al_2O_3$): 3.987 [g/cm$^3$]
Germanium oxide ($GeO_2$): 4.25 [g/cm$^3$]
Niobium oxide ($Nb_2O_5$): 4.6 [g/cm$^3$]
Iron oxide ($Fe_2O_3$): 5.24 [g/cm$^3$]
Nickel oxide (NiO): 6.67 [g/cm$^3$]
Manganese oxide ($Mn_3O_4$): 4.81 [g/cm$^3$]
Cobalt aluminate ($CoAl_2O_4$): 4.29 [g/cm$^3$]

The sintered body according to the present embodiment has an average grain size of 0.05 $\mu$m or more, 0.10 $\mu$m or more or 0.15 $\mu$m or more and 0.75 $\mu$m or less, 0.50 $\mu$m or less or 0.40 $\mu$m or less. The sintered body with a grain size in such a range tends to have high bending strength. A preferred average grain size may range from 0.10 $\mu$m or more and 0.40 $\mu$m or less or 0.25 $\mu$m or more and 0.40 $\mu$m or less.

The crystalline phase of zirconia in the sintered body according to the present embodiment preferably contains at least a tetragonal phase and may be composed of at least one of a tetragonal phase, a cubic phase and a monoclinic phase.

In the present embodiment, a powder X-ray diffraction pattern of a sintered body can be measured with a typical crystallinity analysis X-ray diffractometer (for example, apparatus name: Ultima IV, manufactured by RIGAKU).

The measurement conditions may be as follows:

Radiation source: CuK$\alpha$ radiation ($\lambda$ = 1.5418 angstroms)
Tube voltage: 45 kV
Tube current: 40 mA
Measurement mode: continuous scanning
Scanning speed: 4 degrees/min
Step width: 0.02 degrees
Measurement range: 2$\theta$ = 20 degrees or more and 80 degrees or less
Goniometer: radius 185 mm

In the above measurement, the diffraction intensity of the XRD peak corresponding to the (004) plane of the tetragonal phase is confirmed as the integrated intensity of an XRD peak having a peak top at 2$\theta$ = 72.5 $\pm$ 1 degrees, and the diffraction intensity of the XRD peak corresponding to the (220) plane of the tetragonal phase is confirmed as the integrated intensity of an XRD peak having a peak top at 2$\theta$ = 74 $\pm$ 1 degrees.

In the sintered body according to the present embodiment, the ball drop fracture energy (hereinafter also referred to as "ball drop strength") determined from the following formula is preferably 0.5 J or more, more preferably 0.6 J or more. The ball drop strength is a measure of impact resistance, and a higher ball drop strength indicates higher impact resistance. The sintered body has a ball drop strength of 5 J or less, 2 J or less or 1 J or less, for example.

Ball drop strength (J) = mass of falling weight (g) x drop height (mm) x gravity acceleration (m/s$^2$) x 10$^{-6}$

The gravity acceleration may be 9.8 m/s$^2$.

The ball drop strength can be measured by the same method as in the ball drop test except that the drop height is the following height.

Drop height: 50 to 500 mm

Fracture can be identified from a sample broken into two or more pieces (Fig. 6A). A crack that does not extend from one end to the other end (Fig. 6B) indicates no fracture. In the case of no fracture at a specific drop height in the ball drop test, visual observation may be continued in the same manner in the ball drop test while increasing the drop height to 500 mm in increments of a constant height (for example, 50 mm) until fracture occurs. Alternatively, the ball drop test may be continued with different falling weights instead of different drop heights. For example, in the case of no fracture even at a drop height of 500 mm, a higher ball drop strength can be measured by increasing the mass of the falling weight from 300 g to 500 g and performing the ball drop test again at a drop height of 350 to 500 mm.

The sintered body according to the present embodiment may have any Vickers hardness (GPa), which is, for example, 8.0 GPa or more, preferably 8.5 GPa or more, more preferably 9.0 GPa or more, in terms of the scratch resistance of the surface of the sintered body. The Vickers hardness is, for example, 20.0 GPa or less, 17.5 GPa or less or 15.0 GPa or less. A preferred Vickers hardness is, for example, 8.0 GPa or more and 20.0 GPa or less, 8.5 GPa or more and 17.5 GPa or less or 9.0 GPa or more and 15.0 GPa or less.

In the present embodiment, the Vickers hardness can be measured by a method according to JIS R1610: 2003. The measurement conditions for the Vickers hardness may be as follows:

Sample: (sample thickness) 1.5 $\pm$ 0.5 mm
(measurement surface roughness) Ra $\leq$ 0.02 $\mu$m
Measurement load: 10 kgf

The measurement can be performed with a typical Vickers tester (for example, MV-1 manufactured by Matsuzawa Co., Ltd.) equipped with a square pyramidal diamond indenter. The measurement is performed by statically pressing an indenter onto the surface of a measurement sample to form an indentation mark on the surface of the measurement sample and measuring the diagonal length of the indentation mark with an optical microscope incorporated in a Vickers tester or with a typical optical microscope (for example, VHX-7000, manufactured by Keyence Corporation). The Vickers hardness can be calculated from the diagonal length using the following formula.

$$Hv = F/\{d^2/2\sin(\alpha/2)\}$$

In this formula, Hv denotes the Vickers hardness, F denotes the measurement load (10 kgf = 9.80665 N), d denotes the diagonal length of an indentation mark (mm), and $\alpha$ denotes the angle between opposite faces of the indenter (136 degrees).

A measure of the fracture resistance of the sintered body in the present embodiment may be a fracture toughness value. The fracture toughness value (MPa·m$^{0.5}$) of the sintered body according to the present embodiment measured by the SEPB method specified in JIS R 1607 is, for example, 5 MPa·m$^{0.5}$ or more or 6 MPa·m$^{0.5}$ or more and 20 MPa·m$^{0.5}$ or less or 15 MPa·m$^{0.5}$ or less, preferably 5 MPa·m$^{0.5}$ or more and 20 MPa·m$^{0.5}$ or less or 6 MPa·m$^{0.5}$ or more and 15 MPa·m$^{0.5}$ or less.

In the present embodiment, the bending strength can be measured in a three-point bending test according to JIS R 1601. The sintered body according to the present embodiment has a bending strength of 900 MPa or more or 950 MPa or more and 1500 MPa or less, 1400 MPa or less or 1250 MPa or less, preferably 900 MPa or more and 1500 MPa or less, 950 MPa or more and 1400 MPa or less or 950 MPa or more and 1200 MPa or less.

The sintered body according to the present embodiment may have any color tone, and in CIE1976(L*a*b*) color space L* may be 0 or more and 95 or less, a* may be -15 or more and 15 or less or -5 or more and 15 or less, and b* may be -40 or more and 40 or less or -30 or more and 40 or less.

The lightness L* and chromaticities a* and b* can be measured by a method according to JIS Z 8722 using a typical spectrophotometer (for example, CM-700d, manufactured by Konica Minolta, Inc.). The measurement conditions for lightness L* and chromaticities a* and b* are described below as an example. The measurement preferably uses a black plate as the background (black background measurement).

Light source: D-65 light source
Viewing angle: 10 degrees
Measurement mode: SCI

The color tone may be evaluated in a discoidal sintered body with a diameter of 20 mm and a thickness of 2.7 mm as a sample. The surface to be measured is mirror-polished (Ra $\leq$ 0.02 $\mu$m). The effective area to evaluate the color tone may have a diameter of 10 mm.

The shape of the sintered body according to the present embodiment may be at least one selected from the group consisting of spherical, approximately spherical, elliptical, discoidal, cylindrical, cubic, rectangular parallelepiped, polyhedral and approximately polyhedral. Furthermore, any shape may be used to achieve the desired purpose for various applications.

The sintered body according to the present embodiment can be applied to known sintered bodies, particularly zirconia sintered bodies, such as structural materials, optical materials, and dental materials, and can be used as members requiring relatively high impact resistance, such as covers for ornaments, clocks and watches, cases and other accessories, and exterior members for portable electronic devices, such as mobile phones.

(Powder)

A powder according to the present embodiment is a zirconia powder comprising zirconia containing a stabilizing element and having a monoclinic fraction of more than 70%, wherein the stabilizing element includes at least one rare-earth element other than yttrium.

The powder according to the present embodiment contains zirconia containing a stabilizing element and having a monoclinic fraction of more than 70%. That is, the powder according to the present embodiment contains zirconia containing a stabilizing element and having a crystalline phase composed mainly of a monoclinic phase. The powder according to the present embodiment is a so-called zirconia powder composed mainly of zirconia.

The zirconia in the powder according to the present embodiment contains at least one rare-earth element other than yttria as a stabilizing element. The rare-earth element is preferably other than cerium (Ce). The rare-earth element preferably contains at least one selected from the group consisting of neodymium (Nd), samarium (Sm), gadolinium (Gd), ytterbium (Yb) and holmium (Ho), more preferably at least one selected from the group consisting of neodymium, samarium, gadolinium and ytterbium, still more preferably at least one selected from the group consisting of neodymium, samarium and gadolinium. The rare-earth element preferably contains neodymium because a sintered body produced from the powder according to the present embodiment can have a blue color tone, preferably contains samarium because a sintered body produced from the powder according to the present embodiment can have a yellow color tone, preferably contains gadolinium because a sintered body produced from the powder according to the present embodiment tends to have high ball drop strength and preferably contains ytterbium because a sintered body produced from the powder according to the present embodiment tends to have high resistance to hydrothermal degradation. The zirconia in the powder according to the present embodiment may contain two or more rare-earth elements.

The zirconia in the powder according to the present embodiment may contain yttrium as a stabilizing element. Thus, the stabilizing element in the zirconia contained in the powder according to the present embodiment may be (i) at least one selected from the group consisting of neodymium, samarium, gadolinium, ytterbium and holmium or (ii) yttrium and at least one selected from the group consisting of neodymium, samarium, gadolinium, ytterbium and holmium.

The amount of the stabilizing element in the powder according to the present embodiment may be the same as that in a sintered body produced by sintering the powder according to the present embodiment and may be an amount at which zirconia is partially stabilized. The amount of the stabilizing element on an oxide basis may be more than 0% by mole, 0.1% by mole or more or 0.5% by mole or more and less than 3% by mole, 2.5% by mole or less, 2.0% by mole or less or less than 2.0% by mole and may be more than 0% by mole and less than 3% by mole, preferably more than 0% by mole and 2.5% by mole or less, more preferably 1.0% by mole or more and 2.0% by mole or less. In the present embodiment, the stabilizing element level is the ratio (% by mole) of the total of stabilizing elements on an oxide basis to the total of zirconia and stabilizing elements on an oxide basis.

In a powder containing zirconia containing at least one of neodymium, samarium, gadolinium, ytterbium and holmium as a stabilizing element, each stabilizing element content may be more than 0% by mole, 0.1% by mole or more, 0.2% by mole or more, 0.3% by mole or more, 0.5% by mole or more, 1.0% by mole or more or 1.5% by mole or more and less than 3% by mole, 2.5% by mole or less, 2.3% by mole or less or 2.0% by mole or less.

Each stabilizing element content in the present embodiment is the ratio (% by mole) of each stabilizing element on an oxide basis to the total of zirconia and stabilizing elements on an oxide basis.

In the powder according to the present embodiment, each stabilizing element content is arbitrary as long as the amount of the stabilizing element is satisfied. As the stabilizing element content of the powder according to the present embodiment, the neodymium content is, for example, 0.1% by mole or more, 0.2% by mole or more or 0.5% by mole or more and less than 3.0% by mole, and the samarium content may be 0.1% by mole or more, 0.3% by mole or 0.5% by mole or more and less than 3.0% by mole.

In the powder according to the present embodiment, the gadolinium content is, for example, 0.3% by mole or more or 0.5% by mole or more and less than 3.0% by mole or 2.5% by mole or less, the amount of ytterbium may be 0.1% by mole or more or 0.5% by mole or more and less than 3.0% by mole or 2.5% by mole or less, and the holmium content is more preferably 0.1% by mole or more or 0.5% by mole or more and less than 3.0% by mole or 2.5% by mole or less.

The stabilizing element is preferably solid-dissolved in zirconia, and the powder according to the present embodiment preferably contains no undissolved stabilizing element.

The powder according to the present embodiment may contain a pigment. Thus, a sintered body has a color tone different from the original color tone of zirconia. A pigment in the powder according to the present embodiment is at least one of elements with the function of coloring zirconia other than rare-earth elements and compounds thereof and is preferably, for example, a compound containing a metal element, more preferably a compound containing a transition metal element. A specific pigment is preferably a compound containing at least one element selected from the group consisting of vanadium, chromium, manganese, iron, cobalt, nickel, copper and zinc, more preferably an oxide containing at least one element selected from the group consisting of manganese, iron, cobalt, nickel and zinc.

A sintered body produced from the powder according to the present embodiment more easily exhibits plastic deformation as the pigment component content decreases, and the pigment content of the powder according to the present embodiment is therefore preferably more than 0% by mass and 0.001% by mass or more. Although the powder may have any pigment content as long as a sintered body having a plastic deformation region is obtained, the pigment content is, for example, 10% by mass or less, less than 7.5% by mass, 5.0% by mass or less or 3.5% by mass or less. The pigment content can be determined as the ratio of the total mass of pigments on an oxide basis to the mass of the powder according to the present embodiment on an oxide basis. As a pigment on an oxide basis, for example, cobalt may be $CoO$, iron may be $Fe_2O_3$, manganese may be $Mn_3O_4$, and zinc may be $ZnO$. When a pigment component forms a composite oxide, the pigment component content can be determined as the ratio of the total mass of pigment components on a composite oxide basis to the mass of the sintered body according to the present embodiment.

The powder according to the present embodiment may contain alumina. The powder according to the present embodiment does not necessarily contain alumina and therefore has an alumina content of 0% by mass or more. When the sintered body according to the present embodiment contains alumina, the alumina content may be more than 0% by mass and less than 30% by mass, preferably more than 0% by mass and 25% by mass or less, more preferably 0.005% by mass or more and 20% by mass or less. The alumina content may be 0% by mass or more, more than 0% by mass, 0.005% by mass or more, 0.05% by mass or more or 0.25% by mass or more and 30% by mass or less, 25% by mass or less or 20% by mass or less. From the perspective that a sintered body produced from the powder according to the present embodiment can easily have high permeability, the sintered body preferably contains no alumina. From the perspective that a dense sintered body is easily obtained at a relatively low temperature, the alumina content is preferably 0.05% by mass or more. From the perspective that a sintered body is likely to have good mechanical characteristics, such as static strength, the alumina content is preferably 30% by mass or less. The alumina content may be determined as the mass ratio of aluminum in terms of $Al_2O_3$ to the total of zirconia, stabilizing elements on an oxide basis and aluminum in terms of $Al_2O_3$.

The powder according to the present embodiment may contain, in addition to alumina, at least one additive agent, such as at least one selected from the group consisting of silica, titania, gallium oxide, germanium oxide, niobium oxide and tantalum oxide or at least one selected from the group consisting of silica, titania, gallium oxide and germanium oxide. Containing such an additive agent, the sintered body can have desired mechanical characteristics.

The powder according to the present embodiment may contain incidental impurities, such as hafnia. However, it is preferred not to contain other than a stabilizing element, zirconia, alumina, an optional pigment component and incidental impurities. In the present embodiment, the hafnia content may be calculated on the assumption that 2% by mass of the zirconia content is the hafnia content.

For example, when the sintered body according to the present embodiment is a zirconia sintered body containing alumina and two composite oxide represented by $ABO_3$ and $AB_2O_4$ as pigment components and containing holmium and yttrium as stabilizing elements, each component content may be determined as described below. In the following formula, the term of $ZrO_2$, that is, the zirconia content may be calculated as an amount obtained by subtracting the other component contents (that is, the pigment component content, the alumina content and the stabilizing element content) determined by composition analysis from the total amount of the sintered body, and incidental impurities including 2% by mass of hafnia may be included in the zirconia content.

For example, when the powder according to the present embodiment is a zirconia powder containing alumina and two composite oxide represented by $ABO_3$ and $AB_2O_4$ as pigment components and containing holmium and yttrium as stabilizing elements, each component content may be determined as described below. In the following formula, the term of $ZrO_2$, that is, the zirconia content may be calculated as an amount obtained by subtracting the other component contents (that is, the pigment component content, the alumina content and the stabilizing element content) determined by composition analysis from the total amount of the powder, and incidental impurities including 2% by mass of hafnia may be included in the zirconia content.

$$\text{Amount of pigment component [\% by mass]} = \{(ABO_3 + AB_2O_4)/(Ho_2O_3 + Y_2O_3 + ZrO_2 + Al_2O_3 + ABO_3 + AB_2O_4)\} \times 100$$

$$\text{Amount of alumina [\% by mass]} = \{Al_2O_3/(Ho_2O_3 + Y_2O_3 + ZrO_2 + Al_2O_3 + ABO_3 + AB_2O_4)\} \times 100$$

$$\text{Amount of stabilizing element [\% by mole]} = \{(Ho_2O_3 + Y_2O_3)/(Ho_2O_3 + Y_2O_3 + ZrO_2)\} \times 100$$

$$\text{Amount of holmium [\% by mole]} = \{(Ho_2O_3)/(Ho_2O_3 + Y_2O_3 + ZrO_2)\} \times 100$$

$$\text{Amount of yttrium [\% by mole]} = \{(Y_2O_3)/(Ho_2O_3 + Y_2O_3 + ZrO_2)\} \times 100$$

The monoclinic fraction of zirconia in the powder according to the present embodiment is more than 70%, preferably 75% or more, more preferably 78% or more. The monoclinic fraction is 100% or less. When the zirconia contains at least one of a tetragonal phase and a cubic phase, the monoclinic fraction is less than 100%. The total of the tetragonal fraction and the cubic fraction is less than 30%, preferably 25% or less, more preferably 22% or less. The total of the tetragonal fraction and the cubic fraction may be 0% or more, that is, the tetragonal phase and the cubic phase may not be contained.

The monoclinic phase has a crystallite size ($D_m$) of more than 15 nm and 80 nm or less, preferably 16 nm or more and 60 nm or less, more preferably 18 nm or more and 55 nm or less.

The powder according to the present embodiment preferably has a BET specific surface area of 8 m$^2$/g or more and less than 40 m$^2$/g, 10 m$^2$/g or more and less than 40 m$^2$/g, 9 m$^2$/g or more and 35 m$^2$/g or less, 15 m$^2$/g or more and 35 m$^2$/g or less, 10 m$^2$/g or more and 30 m$^2$/g or less or 17 m$^2$/g or more and 30 m$^2$/g or less. When the BET specific surface area is 8 m$^2$/g or more, preferably 10 m$^2$/g or more, a dense sintered body can be formed even at a relatively low sintering temperature. A powder with a BET specific surface area of less than 40 m$^2$/g tends to have low flowability.

The powder according to the present embodiment preferably has a median size of 0.05 $\mu$m or more and 0.3 $\mu$m or less, preferably 0.1 $\mu$m or more and 0.3 $\mu$m or less.

The powder according to the present embodiment has, for example, a multimodal volumetric particle size distribution curve, and the volumetric particle size distribution curve preferably has peaks (extreme values) at least at a particle size of 0.05 $\mu$m or more and 0.2 $\mu$m or less and at a particle size of 0.3 $\mu$m or more and 0.5 $\mu$m. A powder with a multimodal volumetric particle size distribution curve, such as a bimodal distribution, tends to have good filling characteristics when formed. The resulting green body tends to have a high density, and the ratio of a peak with a particle size of 0.3 $\mu$m or more and 0.5 $\mu$m to a peak with a particle size of 0.05 $\mu$m or more and 0.2 $\mu$m or less in the volumetric particle size distribution curve (hereinafter also referred to as the "particle size peak ratio") is preferably more than 0 and less than 2.5, more preferably 0.1 or more and 2.0 or less, still more preferably 0.2 or more and 1.8 or less.

The powder according to the present embodiment preferably has high formability. More specifically, when the powder according to the present embodiment is subjected to uniaxial pressing at a pressure of 50 $\pm$ 5 MPa and then to cold isostatic pressing (hereinafter also referred to as "CIP") at a pressure of 196 $\pm$ 5 MPa to form a green body, the green body preferably has a relative density (hereinafter also referred to as a "green body density") of 49% or more and 56% or less, more preferably 50% or more and 54% or less.

The powder according to the present embodiment can be used as a precursor of a calcined body or a sintered body and is suitable as a raw material powder for members required to have relatively high impact resistance, such as covers for accessories, such as ornaments, clocks and watches and housings, and exterior members for portable electronic devices, such as mobile phones.

When the powder according to the present embodiment is formed into a calcined body, a sintered body or the like, the powder may be formed into a green body (green compact) before calcination or sintering. The forming, calcination and sintering can all be performed by known methods.

A green body of the powder according to the present embodiment is formed by a known method, for example, at least one selected from the group consisting of uniaxial pressing (powder pressing) forming, cold isostatic pressing, slip casting and injection molding.

The green body may contain a binder to improve shape stability. The binder may be an organic binder used to form ceramics, for example, at least one selected from the group consisting of acrylic resins, polyolefin resins, waxes and plasticizers. The binder content may be 25% by volume or more and 65% by volume or less of the green body. Furthermore, the binder constitutes more than 0% by mass and 10% by mass of 100% by mass of the green body.

The green body may have any shape depending on the purpose in consideration of shrinkage due to sintering, for example, at least one selected from the group consisting of spherical, approximately spherical, elliptical, discoidal, cylindrical, cubic, rectangular parallelepiped, polyhedral and approximately polyhedral.

In the calcination, the powder may be heat-treated at a temperature lower than the sintering temperature, for example, at a temperature of 600°C or more and less than 1200°C in an air atmosphere. The sintering may be performed by a known method, for example, at least one selected from the group consisting of pressure sintering, vacuum sintering and pressureless sintering. In terms of simplicity and industrial applicability, the sintering is preferably pressureless sintering, more preferably pressureless sintering in an air atmosphere at 1150°C or more and 1550°C or less, preferably 1200°C or more and 1500°C or less.

(Method for Producing Powder)

A method for producing the powder according to the present embodiment is described below.

The sintered body according to the present embodiment may be produced by any method, provided that the resulting powder satisfies the above requirements. One example of a method for producing the powder according to the present embodiment includes the step of heat-treating a composition containing a zirconia sol and a stabilizing element source at 500°C or more and 1250°C or less to form a calcined powder, the zirconia sol having an average sol particle size of 100 nm or more and 400 nm or less and containing zirconia containing a monoclinic phase, and the step of grinding the calcined powder.

A calcined powder serving as a precursor of the powder according to the present embodiment is produced through the step of heat-treating a composition containing a zirconia sol and a stabilizing element source at 500°C or more and 1250°C or less to form the calcined powder (hereinafter also referred to as a "powder calcination step"), the zirconia sol having an average sol particle size of 100 nm or more and 400 nm or less and containing zirconia containing a monoclinic phase.

The powder calcination step includes heat treatment at 500°C or more and 1250°C or less or 600°C or more and 1250°C or less. The heat treatment at 600°C or more forms a powder that is easily densified by pressureless sintering. The heat treatment at 1250°C or less can easily form a powder that is easily dispersed by grinding. The heat-treatment time depends on the heat-treatment temperature and may be 30 minutes or more and 10 hours or less.

The heat treatment may be performed in any atmosphere, for example, one selected from the group consisting of an oxidizing atmosphere, a reducing atmosphere, an inert atmosphere and a vacuum atmosphere, preferably an oxidizing atmosphere, more preferably the air atmosphere.

The zirconia sol has an average sol particle size of 100 nm or more, preferably 150 nm or more, and 400 nm or less, preferably 350 nm or less or 300 nm or less. The zirconia sol contains zirconia containing a monoclinic phase and is preferably a zirconia sol containing zirconia composed of crystalline zirconia (hereinafter also referred to as a "crystalline zirconia sol"), more preferably a zirconia sol containing crystalline zirconia containing a monoclinic phase as a main phase.

The zirconia sol tends to be easily ground, and the zirconium element content (hereinafter also referred to as the "adsorbed zirconium content") of the zirconia sol determined by the following formula is therefore preferably 1% by mass or less, more preferably 0.5% by mass or less.

$$W_{zr} = (m/m_0) \times 100$$

In this formula, $W_{zr}$ denotes the adsorbed zirconium content (% by mass). m denotes the mass (mg) of zirconium in terms of zirconia ($ZrO_2$) in a filtrate obtained by ultrafiltration of a slurry containing the zirconia sol dispersed in pure water using an ultrafiltration membrane with a molecular weight cut-off of 500 or more and 3,000,000 or less. The zirconium content of the filtrate may be measured by ICP analysis. $m_0$ denotes the mass (mg) of the zirconia sol heat-treated at 1000°C for 2 hours in an air atmosphere before ultrafiltration.

The zirconia sol to be subjected to the powder calcination step only needs to have the characteristics described above and may be produced by any method, for example, at least one of a neutralization coprecipitation method, a hydrothermal synthesis method and a hydrolysis method. In the hydrothermal synthesis method, a coprecipitate prepared by mixing a zirconium salt, an alkali and the like in the presence of a solvent is heat-treated at 100°C or more and 200°C or less to prepare the zirconia sol. In the hydrolysis method, a zirconium salt is heated in the presence of a solvent to hydrolyze the zirconium salt and prepare the zirconia sol. Thus, the zirconia sol may be a zirconia sol prepared by the hydrothermal synthesis method or the hydrolysis method, preferably the hydrolysis method.

A precursor used in a method for producing a zirconia sol may be a zirconium salt. The zirconium salt may be at least one selected from the group consisting of zirconium oxychloride, zirconium nitrate, zirconium chloride and zirconium sulfate, preferably at least one of zirconium nitrate and zirconium oxychloride, more preferably zirconium oxychloride.

A hydrolysis method is described below as a preferred method for producing a zirconia sol. The hydrolysis conditions may be any conditions under which hydrolysis of a zirconium salt proceeds sufficiently. For example, an aqueous zirconium salt is boiled under reflux for 130 hours or more and 200 hours or less. The average sol particle size tends to increase when an aqueous zirconium salt is hydrolyzed at an anion concentration of 0.2 mol/L or more and 0.6 mol/L or less or 0.3 mol/L or more and 0.6 mol/L or less.

The stabilizing element source may be a compound containing a stabilizing element and may be a compound containing at least one element selected from the group consisting of neodymia, samaria, gadolinia, ytterbia and holmia and their precursors neodymium, samarium, gadolinium, ytterbium and holmium, preferably a chloride containing at least one element selected from the group consisting of neodymium, samarium, gadolinium, ytterbium and holmium (when the stabilizing element is neodymium or the like, the stabilizing element source is hereinafter also referred to as the "neodymium source" or the like). The powder according to the present embodiment may further contain, as a stabilizing element source, yttria or a compound containing yttrium as a precursor of yttria.

The neodymium source may be at least one of neodymia (neodymium oxide) and a neodymium compound serving as a precursor of neodymia, for example, at least one selected from the group consisting of neodymium chloride, neodymia and neodymium carbonate, preferably at least one of neodymium chloride and neodymium oxide.

The samarium source may be at least one of samaria (samarium oxide) and a samarium compound serving as a precursor of samaria, for example, at least one selected from the group consisting of samarium chloride, samaria and samarium carbonate, preferably at least one of samarium chloride and samarium oxide.

The gadolinium source may be at least one of gadolinia (gadolinium oxide) and a gadolinium compound serving as a precursor of gadolinia, for example, at least one selected from the group consisting of gadolinium chloride, gadolinia and gadolinium carbonate, preferably at least one of gadolinium chloride and gadolinium oxide.

The yttrium source may be at least one of yttria (yttrium oxide) and an yttrium compound serving as a precursor of yttria, for example, at least one selected from the group consisting of yttrium chloride, yttria and yttrium carbonate, preferably at least one of yttrium chloride and yttrium oxide.

The composition for the powder calcination step only needs to contain the zirconia sol and a stabilizing element source, and all or part of the stabilizing element source may be solid-dissolved in the zirconia sol.

For example, at least part of a stabilizing element source can be easily solid-dissolved in zirconia, for example, by hydrolysis of a mixture of a zirconium salt and the stabilizer source or by mixing a zirconium salt, the stabilizing element source and an alkali to form a coprecipitate.

The composition to be subjected to the powder calcination step may contain an alumina source. The alumina source is at least one of alumina and an aluminum compound serving as a precursor of alumina, for example, at least one selected from the group consisting of alumina, aluminum hydroxide, aluminum nitrate and aluminum chloride.

The zirconia sol, the stabilizing element source and the alumina source may be mixed so as to have the same composition as that of the desired powder.

Examples of physical properties of a calcined powder include a BET specific surface area of 3 $m^2$/g or more and 50 $m^2$/g or less and a monoclinic crystallite size of 5 nm or more and 100 nm or less.

In the step of grinding a calcined powder (hereinafter also referred to as a "grinding step"), the calcined powder is ground. Grinding the calcined powder tends to result in a higher yield in sintering.

To produce a powder with a desired composition, in the grinding step, a mixed powder of a calcined powder, an alumina source and another additive may be ground instead of the calcined powder. The alumina source may be the alumina source described above. The other additive is, for example, at least one selected from the group consisting of silica, titania, gallium oxide, germanium oxide, niobium oxide and tantalum oxide, preferably germanium oxide or niobium oxide. The other additive source may be at least one of an additive and a precursor thereof.

For coloring a sintered body produced from the powder according to the present embodiment, a mixed powder of a calcined powder and a pigment may be ground instead of the calcined powder in the grinding step.

The pigment source may be at least one of a pigment and a precursor thereof. The precursor of the pigment may be a compound containing an element with the function of coloring zirconia, preferably a compound containing a metal element, for example, at least one selected from the group consisting of oxides, hydroxides, oxyhydroxides, carbonates, oxalates, sulfates, acetates, nitrates, chlorides, fluorides, bromides and iodides of metals, preferably at least one selected from the group consisting of oxides, hydroxides, oxyhydroxides and carbonates of metals. A specific precursor of the pigment may be at least one selected from the group consisting of manganese oxide, iron oxide and cobalt oxide.

The pigment may contain a metal oxide with a perovskite structure ($ABO_3$) or a spinel structure ($AB_2O_4$) and may contain at least one selected from the group consisting of oxides, hydroxides, oxyhydroxides, carbonates, oxalates, sulfates, acetates, nitrates, chlorides, fluorides, bromides and iodides of a transition metal contained in the metal oxide. The metal oxide with the perovskite structure ($ABO_3$) or the spinel structure ($AB_2O_4$) can be produced by mixing at least one selected from the group consisting of oxides, hydroxides, oxyhydroxides, carbonates, oxalates, sulfates, acetates, nitrates, chlorides, fluorides, bromides and iodides of a transition metal contained in the metal oxide and firing the mixture in an air atmosphere at 1200°C to 1500°C. The pigment may contain such a composite metal oxide or may contain an oxide of each of a plurality of metal elements constituting the composite metal oxide.

The pigment source may be a commercially available pigment source, and a preferred pigment source is, for example, at least one selected from the group consisting of $CoAl_2O_4$, $Mn_3O_4$, $Fe_2O_3$, NiO and ZnO, or $CoAl_2O_4$, $Mn_3O_4$, $Fe_2O_3$, NiO and ZnO.

Any grinding method may be chosen. At least one of wet grinding and dry grinding may be chosen, and wet grinding is preferred. Specific wet grinding may be at least one selected from the group consisting of a ball mill, a vibrating mill and a continuous medium stirring mill and is preferably a ball mill.

Under grinding conditions for a ball mill, for example, a calcined powder and a solvent are mixed together to prepare a slurry in which the mass ratio of the calcined powder to the slurry is 30% by mass or more and 60% by mass or less, and the slurry is ground for 10 hours or more and 100 hours or less using zirconia balls with a diameter of 1 mm or more and 15 mm or less as a grinding medium.

Wet grinding may be followed by drying by any method to produce a powder. The drying conditions may be 110°C or more and 130°C or less in an air atmosphere.

To improve the operability of the powder, a method for producing the powder according to the present embodiment may include the step of granulating the powder (hereinafter also referred to as a "granulation step"). Granulation may be performed by any method. For example, a slurry of a mixture of the powder and a solvent is granulated by spraying. The solvent is at least one of water and an alcohol, preferably water. The granulated powder (hereinafter also referred to as "powder granules") may have an average granule size of 30 μm or more and 80 μm or less or 40 μm or more and 70 μm or less and a bulk density of 1.00 g/$cm^3$ or more and 1.70 g/$cm^3$ or less or 1.10 g/$cm^3$ or more and 1.65 g/$cm^3$ or less.

(Method for Producing Sintered Body)

Next, a method for producing the sintered body according to the present embodiment is described.

Although a method for producing the sintered body according to the present embodiment is not particularly limited, the sintered body according to the present embodiment can be produced by a method including at least a step of sintering the powder according to the present embodiment (hereinafter also referred to as a "sintering step"). In the case of production by sintering the powder described above, the powder may be formed into a green body (green compact) before sintering.

The stabilizing element source content of the green body may be the same as the stabilizing element level of the desired sintered body.

The green body may contain an alumina source. The alumina source is at least one of alumina ($Al_2O_3$) and a compound containing aluminum (Al) serving as a precursor of alumina, for example, at least one selected from the group consisting of aluminum chloride, aluminum sulfate, aluminum nitrate, aluminum hydroxide and alumina, preferably alumina.

The alumina source content of the green body may be the same as the alumina content of the desired sintered body.

The green body may contain an additive other than the alumina source. The additive content of the green body may be the same as the additive content of the desired sintered body.

When zirconia containing the stabilizing element is used as the zirconia, the stabilizing element may be added to the zirconia by any method. For example, a hydrous zirconia sol may be mixed with a stabilizing element source with a desired stabilizing element content, drying and calcining the mixture, and washing the mixture with water.

If necessary, the green body may contain a pigment component source. The pigment component source content of the green body may be the same as the pigment component content of the desired sintered body. For example, a green body containing a pigment component source can be produced by forming a mixed powder of the powder and the pigment component source into the green body.

The powder and the pigment component source may be mixed by any method, preferably at least one of dry mixing and wet mixing, more preferably wet mixing, still more preferably wet mixing using a ball mill.

The forming method may be a known forming method for forming a mixed powder into a green compact, preferably at least one selected from the group consisting of uniaxial pressing, isostatic pressing, injection molding, extrusion, tumbling granulation and slip casting, more preferably at least one of uniaxial pressing and isostatic pressing, still more preferably at least one of cold isostatic pressing and uniaxial pressing (powder press forming), still more preferably cold isostatic pressing after uniaxial pressing.

A step of calcining a green body to produce a calcined body (hereinafter also referred to as a "calcination step") may be performed before sintering. A green body can be calcined to remove a binder from the green body.

The calcination step may be performed under any conditions where the sintered body according to the present embodiment can be produced, and is, for example, heat-treatment in an air atmosphere at 400°C or more and less than 1100°C. The resulting calcined body preferably contains zirconia containing a stabilizing element and having a monoclinic fraction of more than 70%, wherein the stabilizing element includes at least one rare-earth element other than yttrium.

In the sintering step, the green body or the calcined body is sintered to form a sintered body. The sintering method may be any sintering method, for example, a known sintering method, such as pressureless sintering, pressure sintering or vacuum sintering. A preferred sintering method may be pressureless sintering, and for ease of operation the sintering method is preferably pressureless sintering alone. Thus, the sintered body according to the present embodiment can be produced as a pressureless sintered body. Pressureless sintering is a method of sintering a green body (or a calcined body) by simple heating without applying an external force to the green body.

Regarding the conditions for the pressureless sintering, the sintering temperature is preferably 1100°C or more and 1600°C or less, 1200°C or more and 1580°C or less or 1200°C or more and 1560°C or less and is, for example, 1200°C or more and 1500°C or less or 1200°C or more and 1450°C or less. The sintering atmosphere may be at least one of the air atmosphere and the oxygen atmosphere, preferably the air atmosphere.

The sintering time may be appropriately adjusted depending on the sintering method, the size and amount of the powder (green body) to be sintered and the performance of a sintering furnace to be used and is, for example, 0.5 hours or more and 8 hours or less.

EXAMPLES

The present disclosure is more specifically described in the following examples. However, the present disclosure is not limited to these examples.

(Average Sol Particle Size)

The average sol particle size of a zirconia sol was measured with a dynamic light scattering particle size distribution measuring apparatus (apparatus name: UPA-UT151, manufactured by MicrotracBEL Corp.). For pretreatment of a sample, a solution containing hydrous zirconia sol was suspended in pure water and was stirred for 3 minutes with an ultrasonic homogenizer.

(Monoclinic Fraction, Tetragonal Fraction, $D_t$ and $D_m$)

An XRD pattern of a powder sample was measured with a typical X-ray diffractometer (apparatus name: Ultima IV, manufactured by Rigaku Corporation). The XRD measurement conditions are as follows:

Radiation source: CuK$\alpha$ radiation ($\lambda$ = 1.5418 angstroms)
Tube voltage: 45 kV
Tube current: 40 mA
Measurement mode: continuous scanning
Scanning speed: 4 degrees/min
Step width: 0.02 degrees
Measurement range: 2$\theta$ = 26 degrees or more and 33 degrees or less
Goniometer: radius 185 mm

The monoclinic fraction, the tetragonal fraction, $D_t$ and $D_m$ were determined from the XRD pattern using the formulae (1) to (4), respectively.

(BET Specific Surface Area)

The BET specific surface area of a powder sample was measured with a typical flow-type automatic specific surface area measuring apparatus (apparatus name: FlowSorb III2305, manufactured by Shimadzu Corporation) using nitrogen as an adsorption gas. The powder sample was degassed in an air atmosphere at 250°C for 30 minutes as pretreatment before the measurement.

(Measurement of Particle Size Distribution)

The median size was determined by measuring a volumetric particle size distribution curve of a powder sample with a Microtrac particle size distribution analyzer (apparatus name: MT3000II, manufactured by MicrotracBEL Corp.) in an HRA mode. Before the measurement, the powder sample was suspended in pure water and was dispersed for 10 minutes with an ultrasonic homogenizer as pretreatment.

(Average Grain Size)

The average grain size of a sample prepared by thermally etching a mirror-polished sintered body was determined by the method described above using SEM-EDS (apparatus name: JSM-IT500LA, manufactured by JEOL Ltd.) and image analysis software (software name: Mac-View Ver. 5, manufactured by MOUNTECH). The thermal etching was performed for 0.5 hours at a temperature 100°C lower than the sintering temperature of the sintered body. The thermally etched sample was coated with Au using a vapor deposition apparatus for SEM (DII-29010SCTR Smart Coater, manufactured by JEOL Ltd.) before SEM observation.
Grain boundaries of zirconia crystal grains were traced on a SEM image taken into the image analysis software to extract crystal grains without interruption of their grain boundaries. After the extraction, the areas and the equivalent circular diameters of the crystal grains were determined by the image analysis software, and the average grain size was determined. A sintered body containing a pigment component and alumina, in which the pigment component and alumina are precipitated as crystal grains, contains crystal grains of the pigment component, alumina crystal grains and zirconia crystal grains in a SEM image. In this case, since alumina particles and the crystal grains of the pigment component are observed as a blackish color tone as compared with zirconia particles and can be detected by SEM-EDS, such crystal grains are excluded, 150 $\pm$ 50 crystal grains are extracted, the areas and the equivalent circular diameters of the crystal grains are determined, and the average grain size is determined.

(Sintered Body Density)

The actual density of a sintered body sample was determined as the ratio (g/cm$^3$) of the mass measured by the mass measurement to the volume measured using the Archimedes' principle. Before the measurement, the mass of the sintered body after drying was measured, and the sintered body was then boiled in water for one hour as pretreatment. When pigment components, alumina and other additives were not contained, the true density (g/cm$^3$) was determined from the ratio of the unit cell mass (g) to the unit cell volume (cm$^3$) of zirconia in the sintered body on the assumption that the crystalline phase of the zirconia was entirely a tetragonal phase. The unit cell volume was determined from a lattice constant calculated from an interplanar spacing determined using the Bragg equation from 2$\theta$ (2$\theta$ = 72.5 $\pm$ 1 degrees and 74 $\pm$ 1 degrees) of peak tops of an XRD peak corresponding to a tetragonal (004) plane and an XRD peak corresponding to a tetragonal (220) plane in a powder X-ray diffraction pattern measured in the sintered body according to the present embodiment. The XRD measurement conditions are described below. When a pigment component, alumina and another additive were contained, the true density of a zirconia portion was calculated by the method described above, and the true density of the sintered body was then calculated from the true densities of the pigment component, alumina and the other additive.

Radiation source: CuKα radiation (λ = 1.5418 angstroms)
Tube voltage: 45 kV
Tube current: 40 mA
Measurement mode: continuous scanning
Scanning speed: 2 degrees/min
Step width: 0.02 degrees
Measurement range: 2θ = 72 degrees or more and 76 degrees or less
Goniometer: radius 185 mm

The unit cell mass was determined as the total mass of cations and anions contained in the unit cell using the results of the composition analysis of the sintered body. The relative density (%) was defined as the ratio of the measured density ($\rho$) to the true density ($\rho_0$) and was taken as the density of the sintered body.

(Identifying Plastic Deformation Region)

The presence or absence of a plastic deformation region of a sintered body sample was determined in a ball drop test using a Du Pont ball drop tester according to JIS K 5600 5-3 (apparatus name: H-50 manufactured by Toyo Seiki Seisaku-Sho, Ltd.). Test conditions are as follows:

Falling weight: (shape) a cylindrical die with a spherical tip 6.35 mm in radius (mass) 300 g, that is, a rectangular parallelepiped weight with a mass of 300 g made of stainless steel 80 mm in width x 20 mm in thickness x 30 mm in height
Drop height: 200 mm
Sample: a plate-like sintered body 40 mm in length x 30 mm in width x 2 mm in thickness with a surface roughness Ra $\leq$ 0.02 $\mu$m on both surfaces (surfaces 40 mm in length x 30 mm in width, main surfaces)

The sample was mounted by fixing a surface (a surface 40 mm in length x 30 mm in width) of the sample to the sample stage of the ball drop tester with a double-sided tape to prevent scattering of pieces of the sample. A tape was attached to a surface of the sample opposite to the fixed surface in the longitudinal direction of the surface to fix the sample. The die was placed such that the falling weight could drop near the center of the fixed sample in the ball drop test.

(Measurement of Ball Drop Strength)

The ball drop strength was measured in the same manner as in the ball drop test for identifying the plastic deformation region except that the drop height was changed. More specifically, the state of the sample after dropping the falling weight was visually observed, and the ball drop strength at the drop height at which the sample was broken was calculated using the following formula.

Ball drop strength (J) = mass of falling weight (g) x drop height (mm) x gravity acceleration (9.8 m/s$^2$) x 10$^{-6}$

Fracture was judged from a sample broken into two or more pieces. A sample having extremely small broken pieces, such as chipping, but maintaining its plate-like shape was not regarded as fracture. In the case of no fracture at a specific drop height in the ball drop test, the drop height was increased from 50 mm to 500 mm in increments of 50 mm until fracture occurred in the ball drop test. In the case of no fracture even at a drop height of 500 mm, the mass of the falling weight was increased from 300 g to 500 g and from 500 g to 1 kg before the ball drop test was performed again at a drop height of 500 mm. For convenience, a sample without fracture in the ball drop test with a falling weight mass of 1 kg at a drop height of 500 mm was considered to have a ball drop strength of > 5 J (more than 5 J).

(Vickers Hardness)

The Vickers hardness was measured with a typical Vickers tester (apparatus name: MV-1 manufactured by Matsuzawa Co., Ltd.) equipped with a square pyramidal diamond indenter.

An indenter was statically pressed onto the surface of a sample, and the diagonal length of an indentation mark formed on the surface of the sample was measured with an optical microscope incorporated in a Vickers tester or a typical optical microscope (apparatus name: VHX-7000, manufactured by Keyence Corporation). The Vickers hardness (GPa) was calculated from the diagonal length using the formula described above.

A discoidal sintered body sample with a diameter of 20 mm and a thickness of 1.8 mm was mirror-polished and used.

(Fracture Toughness)

The fracture toughness value of the sintered body sample was measured by a method according to the SEPB method specified in JIS R 1607.

(Bending Strength)

The bending strength of a sintered body sample was measured in a three-point bending test according to JIS R 1601.

(Measurement of Color Tone)

The color tone of a sintered body sample was measured by a method according to JIS Z 8722. A typical spectrophotometer (apparatus name: CM-700d manufactured by Konica Minolta, Inc.) was used for the measurement, and black background measurement was performed using a black plate as the background. The measurement conditions are as follows:

Light source: D-65 light source
Viewing angle: 10 degrees
Measurement mode: SCI

A discoidal sintered body sample with a diameter of 20 mm and a thickness of 2.7 mm was mirror-polished and used. A surface of the sintered body sample was mirror-polished (Ra $\leq 0.02$ $\mu$m) and was used as an evaluation surface to evaluate the color tone. The effective area to evaluate the color tone had a diameter of 10 mm.

(Appearance Observation near Vickers Indentation)

In a sintered body after the measurement of the Vickers hardness, a square indentation (hereinafter also referred to as a "Vickers indentation") that had come into contact with the Vickers indenter and reflected the shape of the indenter was observed with an optical microscope incorporated in the Vickers tester or a typical optical microscope (apparatus name: VHX-7000, manufactured by Keyence Corporation).

(Microscopic Raman Measurement around Vickers Indentation)

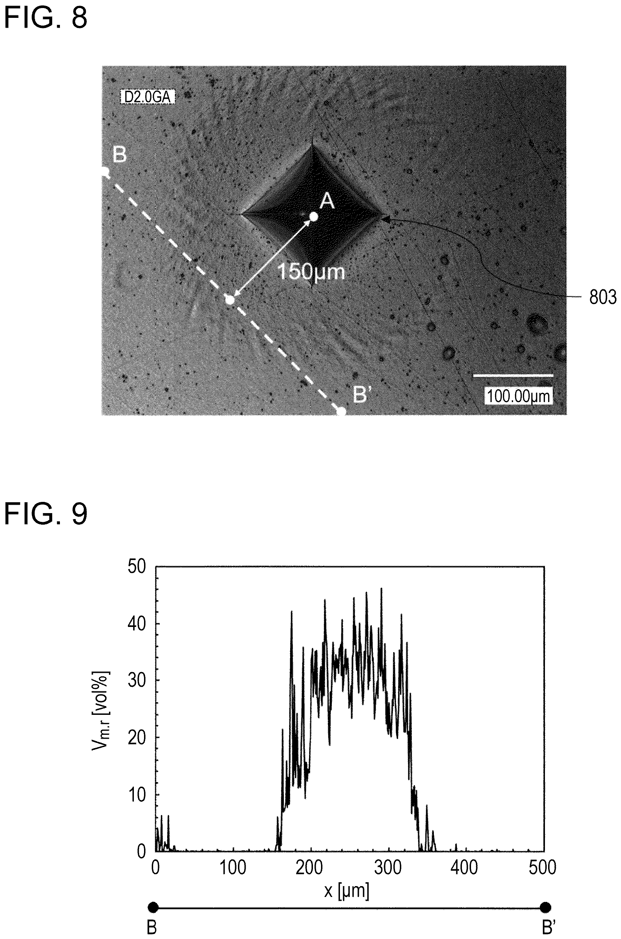

A typical Raman spectrophotometer (apparatus name: NRS-5100, manufactured by JASCO Corporation) was used to photograph a Vickers indentation with an optical microscope incorporated in the apparatus, and line mapping was performed along a line segment B-B' indicated by a broken line in Fig. 9. The line segment B-B' is at a distance of 150 $\mu$m from the central point A of the Vickers indentation and is a line segment with a line segment length of 500 $\mu$m parallel to one side of the square Vickers indentation. The central point A of the Vickers indentation refers to a portion with which the tip of the indenter comes into contact, and the midpoint of the line segment B-B' is a point H at a distance of 150 $\mu$m from the point A. In Fig. 9, x [$\mu$m] denotes the distance from the point B on the line segment B-B'. The mapping conditions are as follows:

Measurement region: 500 $\mu$m
Measurement interval: 1 $\mu$m
Number of measurement points: 500

After the line mapping, the monoclinic fraction of the sintered body surface was calculated using the following formula:

$$V_{m.r} = I_{m.r}/(K \times I_{t.r} + I_{m.r})$$

wherein $V_{m.r}$ denotes the monoclinic fraction, $I_{m.r}$ denotes the total value of Raman peak intensities at 179 cm$^{-1}$ and 189 cm$^{-1}$, $I_{t.r}$ denotes a Raman peak intensity value at 149 cm$^{-1}$, and K denotes a sensitivity correction factor (2.2).

Example 1

An aqueous zirconium oxychloride with a zirconium concentration of 0.4 mol/L and a chloride ion concentration of 0.4 mol/L was hydrolyzed. The aqueous solution after the hydrolysis was ultrafiltered through an ultrafiltration membrane (molecular weight cut-off: 6000) to prepare a zirconia sol with an average sol particle size of 250 nm. The $W_{zr}$ of the zirconia sol was below the detection limit (0.01% by mass or less).

2500 g of an aqueous zirconia sol after the ultrafiltration was mixed with gadolinium chloride hexahydrate at a gadolinium content of 1.6% by mole, and aqueous ammonia was then added for coprecipitation to obtain a precipitate. The precipitate was washed with pure water, was dried in an air atmosphere and was then calcined in an air atmosphere at a calcination temperature of 1000°C for 2 hours to prepare a calcined powder. The calcined powder had a BET specific surface area of 13.6 m$^2$/g and a monoclinic crystallite size of 15 nm.

The calcined powder was mixed with pure water to prepare a slurry, and the slurry was then ground for 24 hours with a ball mill using zirconia balls with a diameter of 2 mm as grinding media. The ground slurry was dried at 110°C in an air atmosphere and was then sieved to remove coarse particles with an aggregate size of more than 180 μm, thereby preparing a powder of zirconia containing gadolinia with a gadolinium content of 1.6% by mole, which was used as a powder of the present example. The crystalline phase of zirconia in the powder of the present example was composed of a monoclinic phase and a tetragonal phase. Furthermore, the median size was 0.21 μm, the volumetric particle size distribution curve had bimodal distribution with peaks at a particle size of 0.14 μm and a particle size of 0.36 μm, and the particle size peak ratio was 0.90.

The powder of the present example was subjected to uniaxial pressing at a pressure of 50 MPa and CIP treatment at a pressure of 196 MPa to form a green body. The green body was subjected to pressureless sintering in an air atmosphere at a sintering temperature of 1350°C for 2 hours to prepare a sintered body.

Example 2

A powder of 0.25% by mass of alumina and zirconia containing 1.6% by mole of gadolinium was prepared in the same manner as in Example 1 except that the calcined powder and an alumina sol were mixed with pure water at an alumina content of 0.25% by mass to prepare a slurry. The crystalline phase of zirconia in the powder of the present example was composed of a monoclinic phase or a tetragonal phase, that is, the crystalline phase of zirconia in the powder of the present example was a monoclinic phase and a tetragonal phase. Furthermore, the median size was 0.22 μm, the volumetric particle size distribution curve had bimodal distribution with peaks at a particle size of 0.14 μm and a particle size of 0.36 μm, and the particle size peak ratio was 1.01.

A green body and a sintered body were produced in the same manner as in Example 1 except that the powder of the present example was used.

Example 3

A powder of the present example composed of 0.25% by mass of alumina and zirconia containing 2.0% by mole of gadolinium was prepared in the same manner as in Example 1 except that gadolinium chloride hexahydrate was added to the aqueous zirconia sol after the ultrafiltration at a gadolinia content of 2.0% by mole and the calcined powder, an alumina sol and pure water were mixed at an alumina content of 0.25% by mass to prepare a slurry. The crystalline phase of zirconia in the powder of the present example was composed of a monoclinic phase or a tetragonal phase, that is, the crystalline phase of zirconia in the powder of the present example was a monoclinic phase and a tetragonal phase. Furthermore, the median size was 0.16 μm, the volumetric particle size distribution curve had bimodal distribution with peaks at a particle size of 0.14 μm and a particle size of 0.35 μm, and the particle size peak ratio was 0.72.

A green body and a sintered body were produced in the same manner as in Example 1 except that the powder of the present example was used and the sintering temperature was 1450°C.

Example 4

A powder of the present example composed of 0.25% by mass of alumina and zirconia containing 1.8% by mole of gadolinium was prepared in the same manner as in Example 1 except that the calcined powders of Example 1 and Example 3 were mixed at a gadolinia content of 1.8% by mole and the mixed calcined powders and an alumina sol were mixed with pure water at an alumina content of 0.25% by mass to prepare a slurry. The crystalline phase of zirconia in the powder of the present example was composed of a monoclinic phase or a tetragonal phase, that is, the crystalline phase of zirconia in the powder of the present example was a monoclinic phase and a tetragonal phase. Furthermore, the median size was 0.15 $\mu$m, the volumetric particle size distribution curve had bimodal distribution with peaks at a particle size of 0.14 $\mu$m and a particle size of 0.35 $\mu$m, and the particle size peak ratio was 0.60. A green body and a sintered body were produced in the same manner as in Example 1 except that the powder of the present example was used and the sintering temperature was 1400°C.

Example 5

A powder of the present example composed of 5% by mass of alumina and zirconia containing 1.6% by mole of gadolinium was prepared in the same manner as in Example 1 except that the calcined powder and an alumina powder were mixed with pure water at an alumina content of 5% by mass to prepare a slurry. The crystalline phase of zirconia in the powder of the present example was composed of a monoclinic phase or a tetragonal phase, that is, the crystalline phase of zirconia in the powder of the present example was a monoclinic phase and a tetragonal phase. A green body and a sintered body were produced in the same manner as in Example 1 except that the powder of the present example was used and the sintering temperature was 1400°C.

Example 6

A powder of the present example composed of 10% by mass of alumina and zirconia containing 1.6% by mole of gadolinium was prepared in the same manner as in Example 1 except that the calcined powder and an alumina powder were mixed with pure water at an alumina content of 10% by mass to prepare a slurry. The crystalline phase of zirconia in the powder of the present example was composed of a monoclinic phase or a tetragonal phase, that is, the crystalline phase of zirconia in the powder of the present example was a monoclinic phase and a tetragonal phase. A green body and a sintered body were produced in the same manner as in Example 1 except that the powder of the present example was used and the sintering temperature was 1400°C.

Example 7

A powder of the present example composed of 20% by mass of alumina and zirconia containing 1.6% by mole of gadolinium was prepared in the same manner as in Example 1 except that the calcined powder and an alumina powder were mixed with pure water at an alumina content of 20% by mass to prepare a slurry. The crystalline phase of zirconia in the powder of the present example was composed of a monoclinic phase or a tetragonal phase, that is, the crystalline phase of zirconia in the powder of the present example was a monoclinic phase and a tetragonal phase. Furthermore, the median size was 0.23 $\mu$m, the volumetric particle size distribution curve had bimodal distribution with peaks at a particle size of 0.14 $\mu$m and a particle size of 0.36 $\mu$m, and the particle size peak ratio was 1.72. A green body and a sintered body were produced in the same manner as in Example 1 except that the powder of the present example was used and the sintering temperature was 1450°C.

Example 8

A powder of the present example composed of 0.25% by mass of alumina and zirconia containing 2.0% by mole of samarium was prepared in the same manner as in Example 1 except that samarium chloride hexahydrate was added to the aqueous zirconia sol after the ultrafiltration at a samarium content of 2.0% by mole and the calcined powder and an alumina sol were mixed with pure water at an alumina content of 0.25% by mass to prepare a slurry. The crystalline phase of zirconia in the powder of the present example was composed of a monoclinic phase or a tetragonal phase, that is, the crystalline phase of zirconia in the powder of the present example was a monoclinic phase and a tetragonal phase. Furthermore, the median size was 0.17 $\mu$m, the volumetric particle size distribution curve had bimodal distribution with peaks at a particle size of 0.14 $\mu$m and a particle size of 0.34 $\mu$m, and the particle size peak ratio was 0.35. A green body and a sintered body were produced in the same manner as in Example 1 except that the powder of the present example was used.

Example 9

A powder composed of 0.25% by mass of alumina and zirconia containing 1.6% by mole of yttrium was prepared in the same manner as in Example 1 except that yttrium chloride hexahydrate was added to the aqueous zirconia sol after the ultrafiltration at an yttrium content of 1.6% by mole and the calcined powder and an alumina sol were mixed with pure water at an alumina content of 0.25% by mass to prepare a slurry.

A powder of the present example composed of 0.25% by mass of alumina and zirconia containing 2.0% by mole of neodymium was prepared in the same manner as in Example 1 except that neodymium chloride hexahydrate was added to the aqueous zirconia sol after the ultrafiltration at a neodymium content of 2.0% by mole and the calcined powder and an alumina sol were mixed with pure water at an alumina content of 0.25% by mass to prepare a slurry.

Subsequently, a powder of the present example containing 0.25% by mass of alumina and composed of zirconia containing 0.5% by mole of neodymium and 1.2% by mole of yttrium was prepared in the same manner as in Example 1 except that the two powders prepared above were mixed at a neodymium content of 0.5% by mole and at an yttrium content of 1.2% by mole. The crystalline phase of zirconia in the powder of the present example was composed of a monoclinic phase and a tetragonal phase. A green body and a sintered body were produced in the same manner as in Example 1 except that the powder of the present example was used.

Example 10

A powder composed of 0.25% by mass of alumina and zirconia containing 2.4% by mole of neodymium was prepared in the same manner as in Example 1 except that neodymium chloride hexahydrate was added to the aqueous zirconia sol after the ultrafiltration at a neodymium content of 2.4% by mole and the calcined powder and an alumina sol were mixed with pure water at an alumina content of 0.25% by mass to prepare a slurry. This powder was mixed with a powder composed of 0.25% by mass of alumina and zirconia containing 1.6% by mole of yttrium prepared in the same manner as in Example 9 to prepare a powder of the present example containing 0.25% by mass of alumina and composed of zirconia containing 1.8% by mole of neodymium and 0.4% by mole of yttrium. The crystalline phase of zirconia in the powder of the present example was composed of a monoclinic phase and a tetragonal phase. A green body and a sintered body were produced in the same manner as in Example 9 except that the powder was used and the sintering temperature was 1300°C.

Comparative Example 1

An aqueous zirconium oxychloride with a zirconium concentration of 0.6 mol/L and a chloride ion concentration of 0.6 mol/L was hydrolyzed. The aqueous solution after the hydrolysis was ultrafiltered through an ultrafiltration membrane (molecular weight cut-off: 6000) to prepare a zirconia sol with an average sol particle size of 100 nm. The $W_{zr}$ of the zirconia sol was below the detection limit (0.01% by mass or less). The aqueous zirconia sol after the ultrafiltration was mixed with yttrium chloride hexahydrate at an yttrium content of 2.0% by mole, and aqueous ammonia was then added for coprecipitation to obtain a precipitate. The precipitate was washed with pure water, was dried in an air atmosphere and was then calcined in an air atmosphere at a calcination temperature of 1000°C for 2 hours to prepare a calcined powder.

The calcined powder was mixed with pure water to prepare a slurry, and the slurry was then ground for 24 hours with a ball mill using zirconia balls with a diameter of 10 mm as grinding media. The ground slurry was dried at 110°C in an air atmosphere and was then sieved to remove coarse particles with an aggregate size of more than 180 $\mu$m, thereby preparing a powder composed of zirconia containing 2.0% by mole of yttrium, which was used as a powder of the present comparative example. The crystalline phase of zirconia in the powder of the present comparative example was composed of a monoclinic phase or a tetragonal phase, that is, the crystalline phase of zirconia in the powder of the present example was a monoclinic phase and a tetragonal phase. The powder of the present comparative example was subjected to uniaxial pressing at a pressure of 50 MPa and CIP treatment at a pressure of 196 MPa to form a green body. The green body was subjected to pressureless sintering in an air atmosphere at a sintering temperature of 1450°C for 2 hours to prepare a sintered body.

Comparative Example 2

A powder of the present comparative example composed of zirconia containing 4.0% by mole of cerium and 1.0% by mole of yttrium was prepared in the same manner as in Comparative Example 1 except that the aqueous zirconia sol after the ultrafiltration was mixed with cerium chloride heptahydrate and yttrium chloride hexahydrate at a cerium content of 4.0% by mole and an yttrium content of 1.0% by mole. The crystalline phase of zirconia in the powder of the present comparative example was composed of a monoclinic phase or a tetragonal phase, that is, the crystalline phase of zirconia in the powder of the present example was a monoclinic phase and a tetragonal phase. A green body and a sintered body were produced in the same manner as in Example 1 except that the powder of the present comparative example was used and the sintering temperature was 1450°C.

Comparative Example 3

A powder of the present comparative example composed of zirconia containing 0.5% by mole of gadolinium and 1.5% by mole of yttrium was prepared in the same manner as in Comparative Example 1 except that the aqueous zirconia sol after the ultrafiltration was mixed with gadolinium chloride hexahydrate and yttrium chloride hexahydrate at a gadolinia content of 0.5% by mole and an yttrium content of 1.5% by mole. The crystalline phase of zirconia in the powder of the present comparative example was composed of a monoclinic phase and a tetragonal phase. A green body and a sintered body were produced in the same manner as in Example 1 except that the powder of the present comparative example was used and the sintering temperature was 1650°C.

Table 1 shows the evaluation results of the powders of the examples and comparative examples. Table 2 shows the evaluation results of the sintered bodies of the examples and comparative examples.

[Table 1]

| | Stabilizing element content [mol%] | | | | | | Additive [wt%] | Dm [μm] | Monoclinic fraction [%] | Tetragonal fraction [%] | BET specific surface area [m²/g] |
|---|---|---|---|---|---|---|---|---|---|---|---|
| | $Nd_2O_3$ | $Sm_2O_3$ | $Gd_2O_3$ | $Y_2O_3$ | $CeO_2$ | Total | $Al_2O_3$ | | | | |
| Example 1 | - | - | 1.6 | - | - | 1.6 | - | 23.0 | 82 | 18 | 18.3 |
| Example 2 | - | - | 1.6 | - | - | 1.6 | 0.25 | 22.8 | 82 | 18 | 18.4 |
| Example 3 | - | - | 2.0 | - | - | 2.0 | 0.25 | 24.0 | 84 | 16 | 18.4 |
| Example 4 | - | - | 1.8 | - | - | 1.8 | 0.25 | 23.0 | 87 | 13 | 19.3 |
| Example 5 | - | - | 1.6 | - | - | 1.6 | 5.0 | 25.8 | 82 | 18 | 18.0 |
| Example 6 | - | - | 1.6 | - | - | 1.6 | 10 | 26.6 | 82 | 18 | 18.1 |
| Example 7 | - | - | 1.6 | - | - | 1.6 | 20 | 25.3 | 84 | 16 | 16.1 |
| Example 8 | - | 2.0 | - | - | - | 2.0 | 0.25 | 25.0 | 84 | 16 | 19.7 |
| Example 9 | 0.5 | - | - | 1.2 | - | 1.7 | 0.25 | 25.5 | 93 | 7 | 18.7 |
| Example 10 | 1.8 | - | - | 0.4 | - | 2.2 | 0.25 | 32.7 | 90 | 10 | 17.4 |
| Comparative example 1 | - | - | - | 2.0 | - | 2.0 | - | 15.6 | 67 | 33 | 17.6 |
| Comparative example 2 | - | - | - | 1.0 | 4.0 | 5.0 | - | 57.2 | 98 | 2 | 10.7 |

"-" in the column of the stabilizing element content and the additive in the above table indicates that the stabilizing element and the additive are not contained.

[Table 2]

| | Sintering temperature [°C] | Density [g/cm3] | Relative density [%] | Average grain size [μm] | Vickers hardness [GPa] | Fracture toughness value [MPa·m$^{0.5}$] | Bending strength [MPa] | Formation of impact mark | Ball drop fracture E [J] | Pattern around indentation |
|---|---|---|---|---|---|---|---|---|---|---|
| Example 1 | 1350 | 6.21 | 100 | 0.26 | 10.5 | 10.6 | 950 | O | 1.72 | Present |
| Example 2 | 1350 | 6.19 | 100 | 0.26 | 10.9 | 12.2 | 1010 | O | 2.21 | Present |
| Example 3 | 1450 | 6.21 | 100 | 0.40 | 11.3 | 10.6 | 1040 | O | 1.47 | Present |
| Example 4 | 1400 | 6.20 | 100 | 0.33 | 11.1 | 10.8 | 1170 | O | 1.72 | Present |
| Example 5 | 1400 | 6.03 | 100 | 0.32 | 11.6 | 11.7 | 1100 | O | 2.21 | - |
| Example 6 | 1400 | 5.88 | 100 | 0.30 | 12.2 | 11.5 | 1190 | O | 1.72 | - |
| Example 7 | 1450 | 5.57 | 100 | 0.35 | 13.0 | 11.4 | 1070 | O | 1.72 | - |
| Example 8 | 1350 | 6.09 | 98 | 0.21 | 10.2 | 11.2 | 1000 | O | 1.72 | Present |
| Example 9 | 1350 | 6.11 | 100 | 0.25 | 11.8 | 8.4 | 1360 | O | 1.47 | Present |
| Example 10 | 1300 | 6.15 | 100 | 0.14 | 10.7 | 10.9 | 950 | O | 1.32 | Present |
| Comparative example 1 | 1450 | 6.08 | 99 | 0.36 | 12.3 | 5.4 | 1200 | X | 0.44 | Absent |
| Comparative example 2 | 1450 | 6.14 | 99 | 0.59 | 10.0 | 12.9 | 625 | O | 1.72 | Absent |
| Comparative example 3 | 1650 | 6.08 | 99 | 1.62 | 10.6 | 8.2 | 850 | O | 0.88 | Absent |

In the column of "Formation of impact mark" in the above table, "O" indicates that an impact mark was observed after the ball drop test, and "X" indicates that no impact mark was observed. Regarding a pattern around an indentation after the Vickers hardness test, "Present" indicates that the pattern was observed, "Absent" indicates that the pattern was not observed, and "-" indicates that the observation was not performed. Fig. 7 shows the appearance of the sintered body of Example 8 after the ball drop test. Fig. 7 shows that an impact mark (depressed portion) was formed without a fracture, such as a crack, in the region with which the falling weight comes into contact in the ball drop test; that is, an impact mark (depressed portion) can be visually observed as a mark of plastic deformation.

All the sintered bodies of Examples 1 to 10 visually had an impact mark as a mark of plastic deformation and had ball drop fracture energy of 1.0 J or more. These sintered bodies had an impact mark visually observed as a mark of plastic deformation as in Fig. 7.

Each of the sintered bodies of Examples 1 to 10 sintered at 1350°C or more and 1450°C or less had a relative density of 98% or more.

It can be seen that the sintered bodies of Examples 1 to 10 have a higher fracture toughness value and higher ball drop fracture energy than the sintered body of Comparative Example 1 containing only yttrium as a stabilizing element. Furthermore, the sintered bodies of Examples 1 to 10 have a bending strength of 900 MPa or more, which is higher than the bending strength of the sintered body of Comparative Example 2 containing cerium as a stabilizing element and containing a large total amount of stabilizing elements or the sintered body of Comparative Example 3 with an average grain size of more than 1.5 $\mu$m.

These show that the sintered bodies of the examples had high fracture strength, fracture toughness and impact resistance.

Fig. 8 shows the appearance near the Vickers indentation of Example 4. Fig. 8 shows a unique pattern formed around the Vickers indentation in Example 4. A pattern similar to the pattern of Fig. 8 was also observed in the sintered bodies of Examples 1 to 4 and Examples 8 to 10. Fig. 9 shows the results of microscopic Raman line measurement near the Vickers indentation in the sintered body of Example 4. Fig. 9 shows that a monoclinic phase is formed along the pattern around the Vickers indentation. In the sintered body of Example 4, it is thought that the application of a load to the sintered body using the Vickers indenter caused phase transformation from the tetragonal phase to the monoclinic phase around the load application point.

(Addition of Niobium Oxide or Germanium Oxide)

Example 11

A powder of the present example containing 0.05% by mass of niobium oxide and composed of zirconia containing 2.0% by mole of gadolinium was prepared in the same manner as in Example 3 except that 0.05% by mass of niobium oxide ($Nb_2O_5$) was added instead of the alumina sol. The crystalline phase of zirconia in the powder of the present example was composed of a monoclinic phase and a tetragonal phase. A green body and a sintered body were produced in the same manner as in Example 3 except that the powder of the present example was used.

Example 12

A powder of the present example containing 0.5% by mass of niobium oxide and composed of zirconia containing 2.0% by mole of gadolinium was prepared in the same manner as in Example 11 except that 0.5% by mass of niobium oxide ($Nb_2O_5$) was added. The crystalline phase of zirconia in the powder of the present example was composed of a monoclinic phase and a tetragonal phase. A green body and a sintered body were produced in the same manner as in Example 11 except that the powder of the present example was used and the sintering temperature was 1400°C.

Example 13

A powder of the present example containing 0.25% by mass of alumina and 0.25% by mass of germanium oxide and composed of zirconia containing 1.8% by mole of neodymium and 0.4% by mole of yttrium was prepared in the same manner as in Example 10 except that 0.25% by mass of germanium oxide ($GeO_2$) was added in addition to alumina at the time of grinding. The crystalline phase of zirconia in the powder of the present example was composed of a monoclinic phase and a tetragonal phase. A green body and a sintered body were produced in the same manner as in Example 3 except that the powder of the present example was used and the sintering temperature was 1300°C.

Example 14

A powder of the present example composed of 0.5% by mass of germanium oxide and zirconia containing 2.0% by mole of neodymium was prepared in the same manner as in Example 1 except that neodymium chloride hexahydrate was added to the aqueous zirconia sol after the ultrafiltration at a neodymium content of 2.0% by mole and a mixed powder of the calcined powder and germanium oxide was treated with a ball mill at a germanium oxide content of 0.5% by mass. The crystalline phase of zirconia in the powder of the present example was composed of a monoclinic phase and a tetragonal phase. A green body and a sintered body were produced in the same manner as in Example 11 except that the powder of the present example was used and the sintering temperature was 1250°C.

Table 3 shows the evaluation results of the powders of the examples. Table 4 shows the evaluation results of the sintered bodies of the examples.

[Table 3]

| | Stabilizing element content [mol%] | | | | Additive [wt%] | | | $D_m$ [nm] | Monoclinic fraction [%] | Tetragonal fraction [%] | BET specific surface area [m2/g] |
|---|---|---|---|---|---|---|---|---|---|---|---|
| | $Nd_2O_3$ | $Gd_2O_3$ | $Y_2O_3$ | Total | $Al_2O_3$ | GeO2 | $Nb_2O_5$ | | | | |
| Example 3 | - | 2.0 | - | 2.0 | 0.25 | - | - | 24.0 | 84 | 16 | 18.4 |
| Example 10 | 1.8 | - | 0.4 | 2.2 | 0.25 | - | - | 32.7 | 90 | 10 | 17.4 |
| Example 11 | - | 2.0 | - | 2.0 | - | - | 0.05 | 29.3 | 83 | 17 | 16.6 |
| Example 12 | - | 2.0 | - | 2.0 | - | - | 0.50 | 30.3 | 81 | 19 | 16.2 |
| Example 13 | 1.8 | - | 0.4 | 2.2 | 0.25 | 0.25 | - | 30.1 | 89 | 11 | 18.0 |
| Example 14 | 2.0 | - | - | 2.0 | - | 0.50 | - | 21.0 | 80 | 20 | 20.3 |

[Table 4]

| | Sintering temperature | Color tone (D65 light source) | | | | Relative density [%] | Average grain size [$\mu$m] | Fracture toughness value [MPa·m$^{0.5}$] | Bending strength [MPa] | Formation of impact mark | Ball drop fracture E [J] |
|---|---|---|---|---|---|---|---|---|---|---|---|
| | [°C] | L* | a* | b* | Color | | | | | | |
| Example 3 | 1450 | 84.97 | -0.78 | -1.91 | White | 100 | 0.26 | 10.6 | 1040 | O | 1.47 |
| Example 10 | 1300 | 72.55 | 2.37 | -19.2 | Light purple | 100 | 0.14 | 10.9 | 950 | O | 1.32 |
| Example 11 | 1450 | 85.32 | -0.73 | -0.34 | White | 100 | 0.30 | 8.0 | 1188 | O | 1.03 |
| Example 12 | 1400 | 88.78 | -0.8 | -0.5 | White | 100 | 0.22 | 11.0 | 970 | O | 1.47 |
| Example 13 | 1300 | 72.96 | 2.14 | -20.5 | Light purple | 100 | 0.14 | 10.3 | 1060 | O | 1.47 |
| Example 14 | 1250 | 70.18 | 7.92 | -16.6 | Purple | 98 | 0.16 | 10.8 | 960 | O | 1.47 |

The above tables show that the addition of $Nb_2O_5$ instead of alumina as an additive agent improves the bending strength, that is, the static strength of the sintered body in Example 11 in which the addition amount is small, and improves the fracture toughness value of the sintered body in Example 12 in which the addition amount is large. The tables also show that the addition of $GeO_2$ as an additive agent improves the bending strength of the sintered body. The tables also show that the addition of these additives causes almost no change in the color of the sintered body as compared with the case where no additive is added.

(Addition of Pigment Component)

Example 15

An aqueous zirconium oxychloride with a zirconium concentration of 0.6 mol/L and a chloride ion concentration of 0.6 mol/L was hydrolyzed. The aqueous solution after the hydrolysis was ultrafiltered through an ultrafiltration membrane (molecular weight cut-off: 6000) to prepare a zirconia sol with an average sol particle size of 100 nm. The $W_{zr}$ of the zirconia sol was below the detection limit (0.01% by mass or less).

The aqueous zirconia sol after the ultrafiltration was mixed with gadolinium chloride hexahydrate and yttrium chloride hexahydrate at a gadolinium content of 1.4% by mole and at an yttrium concentration of 0.4% by mole, and aqueous ammonia was then added for coprecipitation to obtain a precipitate. The precipitate was washed with pure water, was dried in an air atmosphere and was then calcined in an air atmosphere at a calcination temperature of 1150°C for 2 hours to prepare a calcined powder.

The calcined powder was mixed with pure water to prepare a slurry. Iron oxide ($Fe_2O_3$) was then added to the slurry such that the concentration of $Fe_2O_3$ was 0.1% by mass with respect to the calcined powder, and the slurry was then ground and mixed for 24 hours with a ball mill using zirconia balls with a diameter of 2 mm as grinding media. The ground and mixed slurry was dried at 110°C in an air atmosphere and was then sieved to remove coarse particles with an aggregate size of more than 180 $\mu$m, thereby preparing a powder of the present example containing 0.1% by mass of iron oxide and composed of zirconia containing gadolinia and yttria with a gadolinium content of 1.4% by mole and an yttrium content of 0.4% by mole. The crystalline phase of zirconia in the powder of the present example was composed of a monoclinic phase and a tetragonal phase.

The powder of the present example was subjected to uniaxial pressing at a pressure of 50 MPa and CIP treatment at a pressure of 196 MPa to form a green body. The green body was subjected to pressureless sintering in an air atmosphere at a sintering temperature of 1400°C for 2 hours to prepare a sintered body.

Examples 16 and 17

Powders, green bodies and sintered bodies of Examples 16 and 17 were prepared in the same manner as in Example 15 except that the composition was changed to the composition shown in Table 5.

Example 18

A calcined powder of the present example with a gadolinium content of 1.4% by mole and an yttrium content of 0.4% by mole was prepared in the same manner as in Example 15 except that the calcination temperature was 1000°C. A powder of the present example containing 1.0% by mass of iron oxide and 10% by mass of alumina with respect to zirconia containing gadolinia and yttria with a gadolinium content of 1.4% by mole and an yttrium content of 0.4% by mole was prepared in the same manner as in Example 15 except that the addition amount of iron oxide was 1.0% by mass and 10% by mass of alumina was added in addition to the iron oxide. The crystalline phase of zirconia in the powder of the present example was composed of a monoclinic phase and a tetragonal phase.

Examples 19 to 21

Powders of Examples 19 to 21 were prepared in the same manner as in Example 15 except that the composition was changed to the composition shown in Table 5. The crystalline phase of zirconia in the powders of these examples was composed of a monoclinic phase and a tetragonal phase. A green body and a sintered body were produced in the same manner as in Example 15 except that the powder of the present example was used and the sintering temperature was 1650°C.

Examples 22 to 25

Powders of Examples 22 to 25 were prepared in the same manner as in Example 15 except that the same calcined powder as in Example 1 was used and the compositions shown in Table 5 were used. The crystalline phase of zirconia in the powders of these examples was composed of a monoclinic phase and a tetragonal phase. A green body and a sintered body were produced in the same manner as in Example 15 except that the powders of the present examples were used and the sintering temperature was the sintering temperature shown in Table 6.

Table 5 shows the evaluation results of the powders of these examples. Table 6 shows the evaluation results of the sintered bodies of these examples.

[Table 5]

| | Stabilizing element content [mol%] | | | Additive [wt%] | Pigment [wt%] | | | | | $D_m$ [nm] | Monoclinic fraction [%] | Tetragonal fraction [%] | BET specific surface area [m2/g] |
|---|---|---|---|---|---|---|---|---|---|---|---|---|---|
| | $Gd_2O_3$ | $Y_2O_3$ | Total | $Al_2O_3$ | $Fe_2O_3$ | $CoAl_2O_4$ | NiO | $Mn_3O_4$ | | | | | |
| Example 15 | 1.4 | 0.4 | 1.8 | 0 | 0.10 | - | - | - | 38.3 | 96 | 4 | 12.9 |
| Example 16 | 1.4 | 0.4 | 1.8 | 0 | - | 1.00 | - | - | 44.8 | 84 | 6 | 13.1 |
| Example 17 | 1.4 | 0.4 | 1.8 | 0 | - | - | 1.00 | - | 46.8 | 85 | 5 | 12.5 |
| Example 18 | 1.4 | 0.4 | 1.8 | 10 | 1.00 | - | - | - | 31.7 | 84 | 10 | 20.3 |
| Example 19 | 1.4 | 0.4 | 1.8 | 10 | - | 1.00 | - | - | 31.7 | 96 | 4 | 13.2 |
| Example 20 | 1.4 | 0.4 | 1.8 | 10 | - | - | 1.00 | - | 31.7 | 94 | 6 | 12.1 |
| Example 21 | 1.4 | 0.4 | 1.8 | 10 | - | - | - | 0.10 | 31.7 | 84 | 6 | 12.4 |
| Example 22 | 1.6 | - | 1.6 | 0 | - | - | - | 0.50 | 31.8 | 88 | 12 | 21.9 |
| Example 23 | 1.6 | - | 1.6 | 0.05 | - | - | - | 0.50 | 26.4 | 89 | 11 | 21.3 |
| Example 24 | 1.6 | - | 1.6 | 10 | 0.03 | 0.01 | - | - | 31.7 | 85 | 15 | 19.3 |
| Example 25 | 1.6 | - | 1.6 | 10 | 0.07 | - | 0.13 | 0.05 | 31.7 | 75 | 25 | 20.9 |

[Table 6]

| | Sintering temperature [°C] | Color tone (D65 light source) | | | | True density [g/cm3] | Relative density [%] | Average grain size [μm] | Fracture toughness value [MPa·m$^{0.5}$] | Bending strength [MPa] | Formation of impact mark | Ball drop fracture E [J] |
|---|---|---|---|---|---|---|---|---|---|---|---|---|
| | | L* | a* | b* | Color | | | | | | | |
| Example 15 | 1400 | 73.29 | 5.88 | 18.37 | Brown | 6.194 | 100 | 0.38 | 8.3 | 1188 | O | 1.03 |
| Example 16 | 1400 | 53.38 | -0.71 | -25.25 | Blue | 6.168 | 100 | 0.27 | 7.8 | 1212 | O | 0.88 |
| Example 17 | 1400 | 57.78 | -4.13 | 8.68 | Green | 6.199 | 99 | 0.34 | 8.6 | 1068 | O | 1.47 |
| Example 18 | 1400 | 68.74 | 8.07 | 21.41 | Brown | 6.55 | 100 | 0.28 | 10.8 | 1092 | O | 1.18 |
| Example 19 | 1450 | 67.97 | -1.6 | -32.56 | Blue | 5.845 | 101 | 0.38 | 9.4 | 1108 | O | 1.03 |
| Example 20 | 1450 | 72.88 | -11.76 | -17.2 | Light blue | 5.874 | 98 | 0.38 | 8.5 | 1210 | O | 1.03 |
| Example 21 | 1450 | 88.43 | 2.42 | -0.69 | Gray | 5.868 | 98 | 0.37 | 9.7 | 1212 | O | 1.18 |
| Example 22 | 1200 | 44.63 | 0 | -0.8 | Black | 6.178 | 100 | 0.10 | 10.3 | 1000 | O | 1.32 |
| Example 23 | 1200 | 48.36 | 0.7 | 0.41 | Black | 6.184 | 98 | 0.12 | 11.3 | 950 | O | 1.72 |
| Example 24 | 1350 | 92.28 | -0.24 | 2.41 | Light gray | 5.862 | 98 | 0.32 | 11.6 | 1000 | O | 1.72 |
| Example 25 | 1350 | 71.02 | 1.87 | 4.83 | Gray | 5.878 | 0 | 0.26 | 11.7 | 960 | O | 1.18 |

The above tables show that the sintered bodies of Examples 15 to 25 have a color tone different from white due to the addition of the pigment component. Furthermore, the sintered bodies of Examples 15 to 25 have an impact mark as a mark of plastic deformation and have a high bending strength of 950 MPa or more, showing both high dynamic strength and high static strength.

The description, claims, drawings and abstract of Japanese Patent Application No. 2022-29510 filed on February 28, 2022 are hereby incorporated by reference in its entirety as the disclosure of the description of the present disclosure.

REFERENCE SYMBOLS

100 external view illustrating outline of ball drop test
101 sintered body
102 die (punch)
103a, 103b guide
104 falling weight
105 fixing tape
106 sample stage of ball drop tester
107 protective tape
200 sintered body according to present embodiment after ball drop test
201 sintered body
202 impact mark (depressed portion)
203 depth of impact mark (depressed portion)
300 known sintered body after the ball drop test
301 sintered body
302 defect (crack)
400 view illustrating state of installation of sintered body on sample stage of ball drop tester
401 sintered body
402 fixing tape
403 sample stage of ball drop tester
404 double-sided tape (protective tape)
500 drawing illustrating method for measuring depth of impact mark
501 sintered body
502 impact mark (depressed portion)
503A, B line profile
504 depth of impact mark
601 divided sintered body
602 defect (crack)
702 impact mark (depressed portion)
803 Vickers indentation

## Claims

1. A sintered body of zirconia, wherein the zirconia contains a stabilizing element, the stabilizing element contains at least one rare-earth element other than yttrium, and the sintered body has an average grain size of 0.05 $\mu$m or more and 0.75 $\mu$m or less and has a plastic deformable region.

2. The sintered body according to claim 1, which has a stabilizing element content of 0.1% by mole or more and less than 3.0% by mole.

3. The sintered body according to claim 1 or 2, wherein the rare-earth element includes at least one selected from the group consisting of neodymium, gadolinium, ytterbium, holmium and samarium.

4. The sintered body according to any one of claims 1 to 3, wherein the stabilizing element further contains yttrium.

5. The sintered body according to claim 4, which has an yttrium content of 1.2% by mole or less.

6. The sintered body according to any one of claims 1 to 5, comprising alumina.

7. The sintered body according to claim 6, which has an alumina content of 0.1% by mass or more and 30% by mass or less.

8. A zirconia powder comprising zirconia containing a stabilizing element and having a monoclinic fraction of more than 70%, wherein the stabilizing element includes at least one rare-earth element other than yttrium.

9. The powder according to claim 8, which has a rare-earth element content of 0.1% by mole or more and less than 3.0% by mole.

10. The powder according to claim 8 or 9, wherein the rare-earth element includes at least one selected from the group consisting of neodymium, gadolinium, ytterbium, holmium and samarium.

11. The powder according to any one of claims 8 to 10, wherein the stabilizing element further contains yttrium.

12. The powder according to claim 11, which has an yttrium content of 1.2% by mole or less.

13. The powder according to any one of claims 8 to 12, wherein the zirconia has a monoclinic phase with a crystallite size of more than 15 nm and 80 nm or less.

14. The zirconia powder according to any one of claims 8 to 13, which has a BET specific surface area of 8 $m^2$/g or more and less than 40 $m^2$/g.

15. The powder according to any one of claims 8 to 14, comprising alumina.

16. The powder according to claim 15, which has an alumina content of 0.1% by mass or more and 30% by mass or less.

17. A method for producing a sintered body, comprising sintering the powder according to any one of claims 8 to 16.

18. A calcined body comprising zirconia containing a stabilizing element and having a monoclinic fraction of more than 70%, wherein the stabilizing element includes at least one rare-earth element other than yttrium.

FIG. 1

FIG. 2

EP 4 488 232 A1

# FIG. 3

# FIG. 4

# FIG. 5

# FIG. 6

# FIG. 7

FIG. 8

FIG. 9

## INTERNATIONAL SEARCH REPORT

International application No.

**PCT/JP2023/007250**

### A. CLASSIFICATION OF SUBJECT MATTER

***C01G 25/02***(2006.01)i; ***C04B 35/486***(2006.01)i
FI: C04B35/486; C01G25/02

According to International Patent Classification (IPC) or to both national classification and IPC

### B. FIELDS SEARCHED

Minimum documentation searched (classification system followed by classification symbols)

C01G25/00-C01G25/02; C04B35/00-C04B35/84

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

JSTPlus/JMEDPlus/JST7580 (JDreamIII)

### C. DOCUMENTS CONSIDERED TO BE RELEVANT

| Category* | Citation of document, with indication, where appropriate, of the relevant passages | Relevant to claim No. |
|---|---|---|
| X | JP 64-76964 A (HITACHI METALS LTD) 23 March 1989 (1989-03-23) claims, p. 4, lower left column, line 7 to p. 6, upper left column, line 8 | 1-7 |
| Y | | 1-7 |
| A | | 17-18 |
| Y | JP 2021-91601 A (TOSOH CORP) 17 June 2021 (2021-06-17) paragraphs [0014]-[0020] | 1-7 |
| A | | 17-18 |
| X | JP 6-316416 A (RHONE POULENC CHIMIE) 15 November 1994 (1994-11-15) paragraphs [0013], [0018], [0022], [0025] | 1-16 |
| A | | 17-18 |
| A | WO 2020/217942 A1 (TOSOH CORP) 29 October 2020 (2020-10-29) | 1-18 |
| A | JP 7-187774 A (SHINAGAWA REFRACT CO LTD) 25 July 1995 (1995-07-25) | 1-18 |
| A | JP 9-188562 A (SHINAGAWA REFRACT CO LTD) 22 July 1997 (1997-07-22) | 1-18 |

☑ Further documents are listed in the continuation of Box C.      ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 April 2023** | **25 April 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| International application No. |
| --- |
| **PCT/JP2023/007250** |

### C.    DOCUMENTS CONSIDERED TO BE RELEVANT

| Category* | Citation of document, with indication, where appropriate, of the relevant passages | Relevant to claim No. |
| --- | --- | --- |
| A | US 2014/0011661 A1 (KRSTIC, Vladimir) 09 January 2014 (2014-01-09) | 1-18 |
| A | WO 2014/002498 A1 (TOSOH CORP) 03 January 2014 (2014-01-03) | 1-18 |

Form PCT/ISA/210 (second sheet) (January 2015)

**INTERNATIONAL SEARCH REPORT**

International application No.

**PCT/JP2023/007250**

| Box No. III | Observations where unity of invention is lacking (Continuation of item 3 of first sheet) |
|---|---|

This International Searching Authority found multiple inventions in this international application, as follows:

Document 1: JP 64-76964 A (HITACHI METALS LTD) 23 March 1989 (1989-03-23)
      claims, p. 4, lower left column, line 7 to p. 6, upper left column, line 8
(Invention 1) Claims 1-7
In claims of document 1, and p. 4, lower left column line 7 to p. 6, upper left column, line 8, high-toughness $ZrO_2$-based sintered bodies containing 2 mol% of $Y_2O_3$, 0.5 mol% of $Nd_2O_3$, 30 vol% of $Al_2O_3$, and having a crystal grain size of 0.46 μm are described as test No. 5, and claims 1-7 lack novelty in light of document 1, and thus have no special technical features.
However, claims 2-7 dependent on claim 1 have the same technical feature as claim 1. Therefore, claims 1-7 are classified as invention 1.
(Invention 2) Claims 8-18
Claim 8 cannot be said to have a technical feature identical or corresponding to that of claim 8 classified as invention 1.
Accordingly, claim 8 is not considered to be inventively associated with claim 1.
In addition, claim 8 is not substantially identical or equivalent to any of the claims classified as invention 1.
    Therefore, claim 8 cannot be classified as invention 1.
    In addition, claims 8-18 have the special technical feature of containing a stabilizing element and including zirconia having a monoclinic fraction of more than 70%, wherein the stabilizing element contains at least one rare earth element other than yttrium, and are thus classified as invention 2.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**  ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (January 2015)

**INTERNATIONAL SEARCH REPORT**
Information on patent family members

International application No.

**PCT/JP2023/007250**

| Patent document cited in search report | | | Publication date (day/month/year) | Patent family member(s) | | | Publication date (day/month/year) |
|---|---|---|---|---|---|---|---|
| JP | 64-76964 | A | 23 March 1989 | US 5180696 A claims, column 5, line 7 to column 6, line 54 | | | |
| JP | 2021-91601 | A | 17 June 2021 | EP 4074674 A1 paragraphs [0014]-[0020] CN 114787103 A | | | |
| JP | 6-316416 | A | 15 November 1994 | US 5532198 A column 4, lines 5-7, 44-60, column 6, line 60 to column 7, lines 2, 46 to column 8, line 9 | | | |
| WO | 2020/217942 | A1 | 29 October 2020 | US 2022/0212999 A1 CN 113727957 A | | | |
| JP | 7-187774 | A | 25 July 1995 | (Family: none) | | | |
| JP | 9-188562 | A | 22 July 1997 | (Family: none) | | | |
| US | 2014/0011661 | A1 | 09 January 2014 | (Family: none) | | | |
| WO | 2014/002498 | A1 | 03 January 2014 | US 2015/0174863 A1 CN 104411657 A | | | |

Form PCT/ISA/210 (patent family annex) (January 2015)

**REFERENCES CITED IN THE DESCRIPTION**

**Patent documents cited in the description**

- JP 2021091601 A

- JP 2022029510 A